# EUROPEAN PATENT APPLICATION

(11) **EP 4 283 856 A1**
(43) Date of publication of application: **29.11.2023**
(21) Application number: 21927223.4
(22) Date of filing: 25.02.2021
(51) Int. Cl.: H02M 7/219, H02J 50/00

(54) **RECTIFIER AND DRIVING METHOD AND DEVICE THEREFOR**

(71) Applicant: Huawei Technologies Co., Ltd., Shenzhen, Guangdong 518129 (CN)
(72) Inventor: GAO, Lixu, Shenzhen, Guangdong 518129 (CN); JIA, Ligang, Shenzhen, Guangdong 518129 (CN)
(74) Representative: Pfenning, Meinig & Partner mbB
(86) International application number: PCT/CN2021/077974
(87) International publication number: WO 2022/178785

(57) **Abstract**

Embodiments of this application relate to the field of alternating current-direct current conversion technologies, and provide a rectifier, a rectifier driving method, and a device, to improve stability of a signal output by the rectifier. The rectifier includes a first logic circuit. In the first logic circuit, a non-inverting input end of a first comparator is coupled to a first voltage end, and an inverting input end of the first comparator is coupled to a second voltage end; a non-inverting input end of a second comparator is coupled to a third voltage end, and an inverting input end of the second comparator is coupled to a fourth voltage end; and a first input end of a first AND gate is coupled to an output end of the first comparator, and a second input end of the first AND gate is coupled to an output end of the second comparator. The rectifier further includes a first rising edge filter circuit, coupled to an output end of the first AND gate and a first control end, and configured to receive a digital signal output by the output end of the first AND gate, filter out a rising edge signal of the digital signal in the first A ns of each pulse period, generate a switch control signal, and transmit the switch control signal to the first control end.

## Description

### TECHNICAL FIELD

This application relates to the field of alternating current-direct current conversion technologies, and in particular, to a rectifier, a rectifier driving method, and a device.

### BACKGROUND

In recent years, a quantity of electronic devices used in an internet of things (internet of things, IOT) environment, such as a smartphone, a tablet computer, a smartwatch, a Bluetooth headset, and a wearable device, gradually increases. Wireless power transfer (wireless power transfer, WPT) is a technology that directly transfers power in space without a conducting wire. Compared with conventional power transfer, WPT does not need devices to be connected by using a conducting wire, which brings great convenience to users in some application scenarios. Therefore, demands for wireless power transfer grow compared with the past.

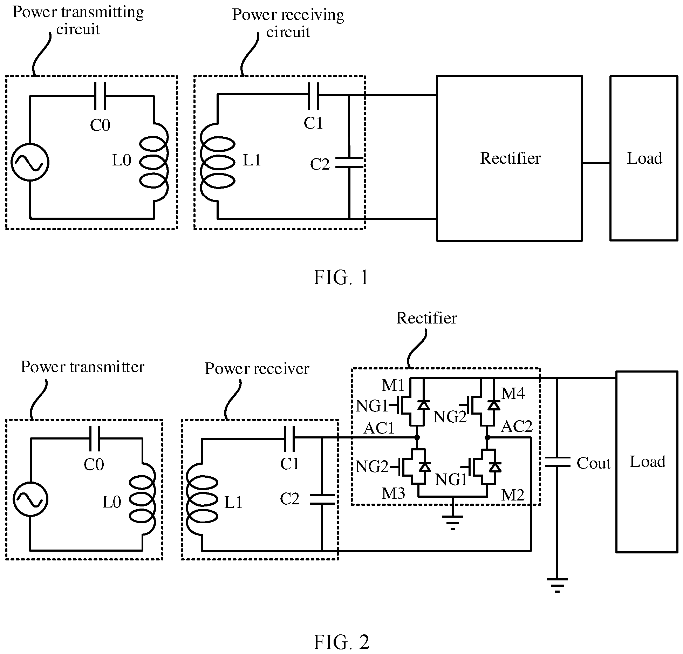

Electricity is usually generated and transmitted in an alternating current form, while many power-consuming terminal devices use direct current power. Therefore, an AC/DC (alternating current/direct current) converter (also referred to as a rectifier) is widely used in power electronics systems. A function of the rectifier (rectifier) is to convert an alternating current into a direct current. As shown in FIG. 1, wireless charging or wireless power transfer may be physically divided into a power transmitting side and a power receiving side. A power transmitting circuit on the power transmitting side sends an alternating electromagnetic field, and a power receiving circuit on the power receiving side receives the alternating electromagnetic field and outputs an alternating current signal. A rectifier receives the alternating current signal, converts the alternating current signal into a direct current signal, and transmits the direct current signal to a load. Therefore, stability of the signal output by the rectifier is directly and closely related to an effect of downstream communication.

Therefore, how to improve the stability of the signal output by the rectifier becomes a technical problem to be urgently resolved by a person skilled in the art.

### SUMMARY

Embodiments of this application provide a rectifier, a rectifier driving method, and a device, to improve stability of a signal output by the rectifier.

To achieve the foregoing objective, the following technical solutions are used in this application.

According to a first aspect of embodiments of this application, a rectifier is provided, including: a first logic circuit, including a first comparator, a second comparator, and a first AND gate, where a non-inverting input end of the first comparator is coupled to a first voltage end, and an inverting input end of the first comparator is coupled to a second voltage end; a non-inverting input end of the second comparator is coupled to a third voltage end, and an inverting input end of the second comparator is coupled to a fourth voltage end; and a first input end of the first AND gate is coupled to an output end of the first comparator, and a second input end of the first AND gate is coupled to an output end of the second comparator; and a first rising edge filter circuit, coupled to an output end of the first AND gate and a first control end, and configured to receive a digital signal output by the output end of the first AND gate, filter out a rising edge signal of the digital signal in the first A ns of each pulse period, generate a switch control signal, and transmit the switch control signal to the first control end. A>0.

The first rising edge filter circuit is added between the first AND gate and the first control end, to filter out an oscillating high-level signal in the digital signal output by the output end of the first AND gate, so that only an actually required high-level signal is left in high-level signals in the switch control signal received by the first control end, and a waveform of the switch control signal is regular. In this way, when a ringing phenomenon occurs, the first control end may be prevented from receiving an on signal, thereby preventing a controllable switching transistor coupled to the first control end from being on. Only the actually required high-level signal is left in the high-level signals received by the first control end, so that the controllable switching transistor coupled to the first control end is on in a main power transfer phase, so that an output of the rectifier is stable and has a relatively small fluctuation.

Optionally, the rectifier further includes: a second logic circuit, including a third comparator, a fourth comparator, and a second AND gate, where a non-inverting input end of the third comparator is coupled to the fourth voltage end, and an inverting input end of the third comparator is coupled to the second voltage end; a non-inverting input end of the fourth comparator is coupled to the third voltage end, and an inverting input end of the fourth comparator is coupled to the first voltage end; and a first input end of the second AND gate is coupled to an output end of the third comparator, and a second input end of the second AND gate is coupled to an output end of the fourth comparator; and a second rising edge filter circuit, coupled to an output end of the second AND gate and a second control end, and configured to receive a digital signal output by the output end of the second AND gate, filter out a rising edge signal of the digital signal in the first B ns of each pulse period, generate a switch control signal, and transmit the switch control signal to the second control end. B>0.

The second rising edge filter circuit is added between the second AND gate and the second control end, to filter out an oscillating high-level signal in the digital signal output by the output end of the second AND gate, so that only an actually required high-level signal is left in high-level signals in the switch control signal received by the second control end, and a waveform of the switch control signal is regular. In this way, when a ringing phenomenon occurs, the second control end may be prevented from receiving an on signal, thereby preventing a controllable switching transistor coupled to the second control end from being on. Only the actually required high-level signal is left in the high-level signals received by the second control end, so that the controllable switching transistor coupled to the second control end is on in a main power transfer phase, so that an output of the rectifier is stable and has a relatively small fluctuation.

Optionally, the first rising edge filter circuit includes a first delay circuit and a third AND gate. The first delay circuit is coupled to the output end of the first AND gate and a first input end of the third AND gate. A second input end of the third AND gate is further coupled to the output end of the first AND gate, and an output end of the third AND gate is coupled to the first control end. The first delay circuit is disposed in the first rising edge filter circuit, so that an oscillating high-level signal in a delayed digital signal output by an output end of the first delay circuit may be staggered from the oscillating high-level signal in the digital signal output by the output end of the first AND gate. After an AND operation is performed on the delayed digital signal output by the output end of the first delay circuit and the digital signal output by the output end of the first AND gate, the oscillating high-level signal can be filtered out, so that a rectifier control circuit outputs a regular switch control signal to the first control end.

Optionally, the second rising edge filter circuit includes a second delay circuit and a fourth AND gate. The second delay circuit is coupled to the output end of the second AND gate and a first input end of the fourth AND gate. A second input end of the fourth AND gate is further coupled to the output end of the second AND gate, and an output end of the fourth AND gate is coupled to the second control end. The second delay circuit is disposed in the second rising edge filter circuit, so that an oscillating high-level signal in a delayed digital signal output by an output end of the second delay circuit may be staggered from the oscillating high-level signal in the digital signal output by the output end of the second AND gate. After an AND operation is performed on the delayed digital signal output by the output end of the second delay circuit and the digital signal output by the output end of the second AND gate, the oscillating high-level signal in the digital signal output by the output end of the second AND gate can be filtered out, so that a rectifier control circuit outputs a regular switch control signal to the second control end.

Optionally, the first rising edge filter circuit includes a first current trend determining circuit, a fifth AND gate, and a first flip-flop. The first current trend determining circuit is coupled to a current end and a first input end of the fifth AND gate, and is configured to: receive and process a signal of the current end; when the signal of the current end presents a rising trend, input 1 to the first input end of the fifth AND gate; and when the signal of the current end presents a falling trend, input 0 to the first input end of the fifth AND gate. A second input end of the fifth AND gate is coupled to the output end of the first AND gate, and an output end of the fifth AND gate is coupled to a set end of the first flip-flop. A reset end of the first flip-flop is coupled to the output end of the first AND gate, and an output end of the first flip-flop is coupled to the first control end. When an oscillating high-level signal in the digital signal output by the output end of the first AND gate appears, the current of the current end presents a falling trend. When an actually required high-level signal in the digital signal output by the output end of the first AND gate appears, the current of the current end presents a rising trend. Under a joint action of the first current trend determining circuit, the fifth AND gate, and the first flip-flop, the oscillating high-level signal in the digital signal output by the output end of the first AND gate is filtered out, to avoid an unstable output of the rectifier caused by a ringing problem.

Optionally, the second rising edge filter circuit includes a second current trend determining circuit, a sixth AND gate, and a second flip-flop. The second current trend determining circuit is coupled to a current end and a first input end of the sixth AND gate, and is configured to: receive and process a signal of the current end; when the signal of the current end presents a rising trend, input 0 to the first input end of the sixth AND gate; and when the signal of the current end presents a falling trend, input 1 to the first input end of the sixth AND gate. A second input end of the sixth AND gate is coupled to the output end of the first AND gate, and an output end of the sixth AND gate is coupled to a set end of the second flip-flop. A reset end of the second flip-flop is coupled to the output end of the second AND gate, and an output end of the second flip-flop is coupled to the second control end. When an oscillating high-level signal in the digital signal output by the output end of the second AND gate appears, the current of the current end presents a rising trend. When an actually required high-level signal in the digital signal output by the output end of the second AND gate appears, the current of the current end presents a falling trend. Under a joint action of the second current trend determining circuit, the sixth AND gate, and the second flip-flop, the oscillating high-level signal in the digital signal output by the output end of the second AND gate is filtered out, to avoid an unstable output of the rectifier caused by the ringing problem.

Optionally, the rectifier further includes the second logic circuit and the second rising edge filter circuit. The second rising edge filter circuit includes a sixth AND gate and a second flip-flop. The first current trend determining circuit is further coupled to a first input end of the sixth AND gate, and is further configured to: when the signal of the current end presents a rising trend, input 0 to the first input end of the sixth AND gate; and when the signal of the current end presents a falling trend, input 1 to the first input end of the sixth AND gate. A second input end of the sixth AND gate is coupled to the output end of the first AND gate, and an output end of the sixth AND gate is coupled to a set end of the second flip-flop. A reset end of the second flip-flop is coupled to the output end of the second AND gate, and an output end of the second flip-flop is coupled to the second control end. The first current trend determining circuit receives and processes the signal of the current end. When the signal of the current end presents a rising trend, 1 is input to the first input end of the fifth AND gate, and 0 is input to the first input end of the sixth AND gate. When the signal of the current end I presents a falling trend, 0 is input to the first input end of the fifth AND gate 34, and 1 is input to the first input end of the sixth AND gate 44. The second current trend determining circuit does not need to be additionally disposed, so that a structure of the rectifier can be simplified.

Optionally, the rectifier further includes a rectifier circuit, and the first control end is coupled to the rectifier circuit.

Optionally, the rectifier further includes the second rising edge filter circuit. The rectifier circuit includes a first switch, a second switch, a third switch, and a fourth switch. The first switch is configured to connect the first voltage end and the second voltage end, and a control end of the first switch is coupled to the first control end. The second switch is configured to connect the third voltage end and the fourth voltage end, and a control end of the second switch is coupled to the first control end. The third switch is configured to connect the first voltage end and the third voltage end, and a control end of the third switch is coupled to the second control end. The fourth switch is configured to connect the second voltage end to the fourth voltage end, and a control end of the fourth switch is coupled to the second control end.

According to a second aspect of embodiments of this application, a device is provided, including a power receiving circuit and the rectifier according to the first aspect. The power receiving circuit is coupled to the first voltage end and the fourth voltage end of the rectifier, and is configured to provide an alternating current signal for the first voltage end and the fourth voltage end.

Optionally, the power receiving circuit includes a cable, and the cable is coupled to the current end of the rectifier. In this way, the current end can directly receive a current on the cable without disposing another component, so that a structure is simple.

According to a third aspect of embodiments of this application, a rectifier driving method is provided. The rectifier includes a first logic circuit and a first rising edge filter circuit. The first logic circuit includes a first comparator, a second comparator, and a first AND gate. The rectifier driving method includes: A non-inverting input end of the first comparator receives a signal of a first voltage end, an inverting input end of the first comparator receives a signal of a second voltage end, and the first comparator performs a comparison operation on the signals received by the non-inverting input end and the inverting input end, and outputs an operation result from an output end of the first comparator. A non-inverting input end of the second comparator receives a signal of a third voltage end, an inverting input end of the second comparator receives a signal of a fourth voltage end, and the second comparator performs a comparison operation on the signals received by the non-inverting input end and the inverting input end, and outputs an operation result from an output end of the second comparator. A first input end of the first AND gate receives a signal output by the output end of the first comparator, a second input end of the first AND gate receives a signal output by the output end of the second comparator, and the first AND gate performs a logic operation on the signals received by the first input end and the second input end, and outputs an operation result from an output end of the first AND gate. The first rising edge filter circuit receives a digital signal output by the output end of the first AND gate, filters out a rising edge signal of the digital signal in the first A ns of each pulse period, generates a switch control signal, and transmits the switch control signal to a first control end. A>0. Beneficial effects of the rectifier driving method are the same as those of the foregoing rectifier, and details are not described herein again.

Optionally, the rectifier further includes a second logic circuit and a second rising edge filter circuit. The second logic circuit includes a third comparator, a fourth comparator, and a second AND gate. The rectifier driving method further includes: A non-inverting input end of the third comparator receives the signal of the fourth voltage end, an inverting input end of the third comparator receives the signal of the second voltage end, and the third comparator performs a comparison operation on the signals received by the non-inverting input end and the inverting input end, and outputs an operation result from an output end of the third comparator. A non-inverting input end of the fourth comparator receives the signal of the third voltage end, an inverting input end of the fourth comparator receives the signal of the first voltage end, and the fourth comparator performs a comparison operation on the signals received by the non-inverting input end and the inverting input end, and outputs an operation result from an output end of the fourth comparator. A first input end of the second AND gate receives a signal output by the output end of the third comparator, a second input end of the second AND gate receives a signal output by the output end of the fourth comparator, and the second AND gate performs a logic operation on the signals received by the first input end and the second input end, and outputs an operation result from an output end of the second AND gate. The second rising edge filter circuit receives a digital signal output by the output end of the second AND gate, filters out a rising edge signal of the digital signal in the first B ns of each pulse period, generates a switch control signal, and transmits the switch control signal to a second control end. B>0.

Optionally, the first rising edge filter circuit includes a first delay circuit and a third AND gate. That the first rising edge filter circuit receives a digital signal output by the output end of the first AND gate, filters out a rising edge signal of the digital signal in the first A ns of each pulse period, generates a switch control signal, and transmits the switch control signal to a first control end includes: The first delay circuit receives the digital signal output by the output end of the first AND gate, delays the digital signal by a ns by using a delay function of the first delay circuit, and then outputs a delayed digital signal. The delayed digital signal is staggered from a high level of the digital signal in the first A ns of each pulse period, and a≤A. The third AND gate performs a logic operation on the delayed digital signal output by the first delay circuit and the digital signal output by the output end of the first AND gate, to filter out the rising edge signal of the digital signal in the first A ns of each pulse period, generates a switch control signal, and transmits the switch control signal to the first control end.

Optionally, the first rising edge filter circuit includes a first current trend determining circuit, a fifth AND gate, and a first flip-flop. That the first rising edge filter circuit receives a digital signal output by the output end of the first AND gate, filters out a rising edge signal of the digital signal in the first A ns of each pulse period, generates a switch control signal, and transmits the switch control signal to a first control end includes: The first current trend determining circuit receives and processes a signal of a current end; when the signal of the current end presents a rising trend, inputs 1 to a first input end of the fifth AND gate; and when the signal of the current end presents a falling trend, inputs 0 to the first input end of the fifth AND gate. The fifth AND gate performs a logic operation on the digital signal output by the output end of the first AND gate and a signal output by the first current trend determining circuit, to filter out the rising edge signal of the digital signal in the first A ns of each pulse period, and outputs an operation result to a set end of the first flip-flop. The first flip-flop generates a switch control signal based on signals of a reset end and the set end, and transmits the switch control signal to the first control end.

Optionally, the second rising edge filter circuit includes a second delay circuit and a fourth AND gate. That the second rising edge filter circuit receives a digital signal output by the output end of the second AND gate, filters out a rising edge signal of the digital signal in the first B ns of each pulse period, generates a switch control signal, and transmits the switch control signal to a second control end includes: The second delay circuit receives the digital signal output by the output end of the second AND gate, delays the digital signal by b ns by using a delay function of the second delay circuit, and then outputs a delayed digital signal. The delayed digital signal is staggered from a high level of the digital signal in the first B ns of each pulse period, and b≤B. The fourth AND gate performs a logic operation on the delayed digital signal output by the second delay circuit and the digital signal output by the output end of the second AND gate, to filter out the rising edge signal of the digital signal in the first B ns of each pulse period, generates a switch control signal, and transmits the switch control signal to the second control end.

Optionally, the second rising edge filter circuit includes a second current trend determining circuit, a sixth AND gate, and a second flip-flop. That the second rising edge filter circuit receives a digital signal output by the output end of the second AND gate, filters out a rising edge signal of the digital signal in the first B ns of each pulse period, generates a switch control signal, and transmits the switch control signal to a second control end includes: The second current trend determining circuit receives and processes a signal of a current end; when the signal of the current end presents a rising trend, inputs 0 to a first input end of the sixth AND gate; and when the signal of the current end presents a falling trend, inputs 1 to the first input end of the sixth AND gate. The sixth AND gate performs a logic operation on the digital signal output by the output end of the second AND gate and a signal output by the second current trend determining circuit, to filter out the rising edge signal of the digital signal in the first B ns of each pulse period, and outputs an operation result to a set end of the second flip-flop. The second flip-flop generates a switch control signal based on signals of a reset end and the set end, and transmits the switch control signal to the second control end.

Optionally, the rectifier further includes a second logic circuit and a second rising edge filter circuit. The second rising edge filter circuit includes a sixth AND gate and a second flip-flop. That the second rising edge filter circuit receives a digital signal output by the output end of the second AND gate, filters out a rising edge signal of the digital signal in the first B ns of each pulse period, generates a switch control signal, and transmits the switch control signal to a second control end includes: The first current trend determining circuit receives and processes the signal of the current end; when the signal of the current end presents a rising trend, inputs 0 to a first input end of the sixth AND gate; and when the signal of the current end presents a falling trend, inputs 1 to the first input end of the sixth AND gate. The sixth AND gate performs a logic operation on the digital signal output by the output end of the second AND gate and a signal output by the first current trend determining circuit, to filter out the rising edge signal of the digital signal in the first B ns of each pulse period, and outputs an operation result to a set end of the second flip-flop. The second flip-flop generates a switch control signal based on signals of a reset end and the set end, and transmits the switch control signal to the second control end.

### BRIEF DESCRIPTION OF DRAWINGS

FIG. 1 is a principle diagram of a wireless power transfer system according to a related technology;
FIG. 2 is a principle diagram of a wireless power transfer system according to an embodiment of this application;
FIG. 3a is a schematic diagram of a structure of a rectifier according to an embodiment of this application;
FIG. 3b is a theoretical waveform graph of the rectifier shown in FIG. 3a;
FIG. 3c is a waveform graph when the rectifier shown in FIG. 3a rings;
FIG. 4a is a schematic diagram of a structure of another rectifier according to an embodiment of this application;
FIG. 4b is a waveform graph of the rectifier shown in FIG. 4a;
FIG. 5a is a schematic diagram of a structure of still another rectifier according to an embodiment of this application;
FIG. 5b is a waveform graph of the rectifier shown in FIG. 5a;
FIG. 6a is a schematic diagram of a structure of still another rectifier according to an embodiment of this application;
FIG. 6b is a schematic diagram of a specific structure of the rectifier shown in FIG. 6a;
FIG. 6c is a waveform graph of the rectifier shown in FIG. 6a;
FIG. 6d is a schematic diagram of a rectification principle of a rectifier circuit according to an embodiment of this application;
FIG. 6e is a schematic diagram of a rectification principle of another rectifier circuit according to an embodiment of this application;
FIG. 6f is a schematic diagram of a structure of a device according to an embodiment of this application;
FIG. 7a is a schematic diagram of a structure of another device according to an embodiment of this application;
FIG. 7b is a waveform graph of a rectifier control circuit in the device shown in FIG. 7a;
FIG. 7c is a schematic diagram of a structure of still another device according to an embodiment of this application;
FIG. 8a is a schematic diagram of a structure of another device according to an embodiment of this application; and
FIG. 8b is a waveform graph of a rectifier control circuit in the device shown in FIG. 8a.

### Reference numerals:

10: first logic circuit; 11: first comparator; 12: second comparator; 13: first AND gate; 20: second logic circuit; 21: third comparator; 22: fourth comparator; 23: second AND gate; 30: first rising edge filter circuit; 31: first delay circuit; 311: first inverter; 312: second inverter; 32: third AND gate; 33: first current trend determining circuit; 34: fifth AND gate; 35: first flip-flop; 40: second rising edge filter circuit; 41: second delay circuit; 411: third inverter; 412: fourth inverter; 42: fourth AND gate; 43: second current trend determining circuit; 44: sixth AND gate; 45: second flip-flop; 51: first switch; 52: second switch; 53: third switch; 54: fourth switch; V1: first voltage end; V2: second voltage end; V3: third voltage end; V4: fourth voltage end; V5: fifth voltage end; VGND: reference ground end; Vrect: output end of a rectifier circuit; M1: first controllable switching transistor; M2: second controllable switching transistor; M3: third controllable switching transistor; M4: fourth controllable switching transistor; NG1: first control end; NG2: second control end; AC1: first connection point; AC2: second connection point; NG1-1: output end of the first AND gate; NG2-1: output end of the second AND gate; C3: third capacitor; C4: fourth capacitor; Cout: output capacitor; NG1-2: output end of the first delay circuit; NG2-2: output end of the second delay circuit; I: current end; NG1-3: output end of the first current trend determining circuit; NG2-3: output end of the second current trend determining circuit; L1: coil; IL1: current output by the coil; NG1-4: output end of the fifth AND gate; NG2-4: output end of the sixth AND gate; R: reset end; S: set end; CK: clock end of a D flip-flop; D: input end of the D flip-flop; and Q: output end of the flip-flop.

### DESCRIPTION OF EMBODIMENTS

The following describes technical solutions in embodiments of this application with reference to accompanying drawings in embodiments of this application. It is clear that the described embodiments are merely some rather than all embodiments of this application.

The following terms such as "first" and "second" are merely intended for ease of description, and shall not be understood as indicating or implying relative importance or implying a quantity of indicated technical features. Therefore, features defined with "first", "second", and the like may explicitly or implicitly include one or more such features. In descriptions of this application, unless otherwise stated, "a plurality of" means two or more than two.

In addition, in embodiments of this application, "up", "down", "left", and "right" are not limited to definitions relative to directions in which components are schematically placed in accompanying drawings. It should be understood that these directional terms may be relative concepts used for relative description and clarification, and may change correspondingly based on a change of a direction in which a component in an accompanying drawing is placed.

In this application, unless otherwise expressly specified and limited, the term "connected" should be understood in a broad sense. For example, "connected" may be fixedly connected, or may be connected in a detachable manner or may be integrated, which may be directly connected or indirectly connected by using an intermediate medium. In addition, the term "coupled" may be directly electrically connected, or may be indirectly electrically connected by using an intermediate medium.

An embodiment of this application provides a device. The device may be an electric automobile, an electric motorcycle, an electric bicycle, a rechargeable home appliance (for example, a soybean milk machine or a vacuum cleaning robot), an electronic device (for example, a smartphone, a tablet computer, a smartwatch, a Bluetooth headset, or a wearable device), a virtual reality (virtual reality, VR) terminal device, an augmented reality (augmented reality, AR) terminal device, an unmanned aerial vehicle, a medical electronic component, or the like. A specific form of the device is not particularly limited in this embodiment of this application.

The electric automobile is used as an example. Abattery charging method of the electric automobile usually includes contact charging and wireless charging. The contact charging means conducting electricity through metallic contact between a plug and a socket, and the wireless charging means transferring electric energy by using a coupled alternating magnetic field as a medium. Compared with the contact charging, the wireless charging has many advantages, and becomes a mainstream charging manner of future electric automobiles.

Electricity is usually generated and transmitted in an alternating current form, while many power-consuming terminal devices use direct current power. Therefore, an AC/DC (alternating current/direct current) converter (also referred to as a rectifier) is widely used in power electronics systems. A function of the rectifier (rectifier) is to convert an alternating current into a direct current.

In an actual application, as shown in FIG. 2, a power transmitting end of a wireless power transfer system generally includes a power transmitting circuit, and the power transmitting circuit sends an alternating current in a form of an alternating magnetic field. A power receiving end of the wireless power transfer system usually includes a power receiving circuit, and the power receiving circuit receives the alternating magnetic field from the power transmitting circuit and outputs an alternating current signal. A voltage signal received by a first connection point AC1 of the receiving end and a voltage signal received by a second connection point AC2 are alternating current signals, and the alternating current signals need to be converted into direct current signals by using a rectifier. That is, the power receiving circuit receives an alternating current signal sent by the power transmitting circuit, and provides the alternating current signal to the rectifier (the first connection point AC 1 and the second connection point AC2 of the rectifier) as an alternating current source.

The wireless power transfer system shown in FIG. 2 may implement wireless power transfer (wireless power transfer, WPT) based on a Qi (WPC organization trademark) protocol led by WPC (wireless power consortium, a standard organization that promotes low-frequency wireless power transfer). The Qi protocol has the following operating characteristics: A coil L0 in the power transmitting circuit is very close to a coil L1 in the power receiving circuit, and an operating frequency may be adjusted within a specified range (110 kHz to 205 kHz) based on a requirement.

For a structure of the rectifier, as shown in FIG. 2, the rectifier includes a rectifier circuit, and the rectifier circuit includes a first switch, a second switch, a third switch, and a fourth switch. In FIG. 2, for example, the first switch includes a first controllable switching transistor M1, the second switch includes a second controllable switching transistor M2, the third switch includes a third controllable switching transistor M1, and the fourth switch includes a fourth controllable switching transistor M4.

A control end of the first controllable switching transistor M1 is coupled to a first control end NG1. A control end of the second controllable switching transistor M2 is coupled to the first control end NG1. A control end of the third controllable switching transistor M1 is coupled to a second control end NG2 of a rectifier control circuit. A control end of the fourth controllable switching transistor M4 is coupled to the second control end NG2.

In an operating process of the rectifier, the first control end NG1 controls the first controllable switching transistor M1 and the second controllable switching transistor M2, and the second control end NG2 controls the third controllable switching transistor M3 and the fourth controllable switching transistor M4. When the first control end NG1 is at a high level, the first controllable switching transistor M1 and the second controllable switching transistor M2 are on. When the first control end NG1 is at a low level, the first controllable switching transistor M1 and the second controllable switching transistor M2 are off.

Similarly, when the second control end NG2 is at a high level, the third controllable switching transistor M3 and the fourth controllable switching transistor M4 are on. When the second control end NG2 is at a low level, the third controllable switching transistor M3 and the fourth controllable switching transistor M4 are off.

In some embodiments, a rectifier control circuit is provided, to transmit switch control signals to the first control end NG1 and the second control end NG2 of the rectifier circuit.

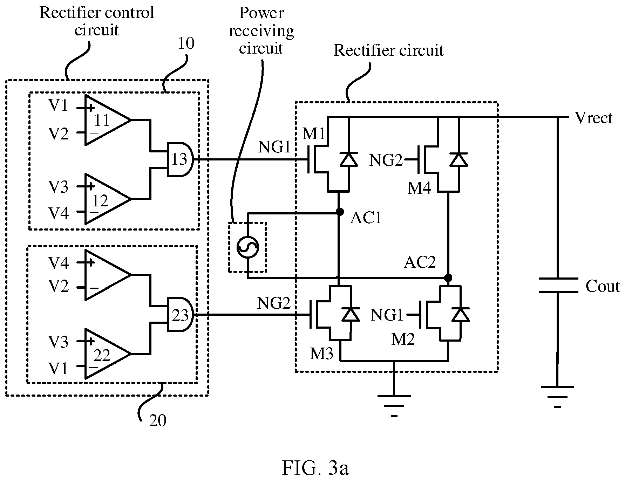

As shown in FIG. 3a, the rectifier includes the rectifier circuit and a rectifier control circuit, and the rectifier control circuit includes a first logic circuit 10 and a second logic circuit 20.

The first logic circuit 10 includes a first comparator 11, a second comparator 12, and a first AND gate 13. A non-inverting input end of the first comparator 11 is coupled to a first voltage end V1, and an inverting input end of the first comparator 11 is coupled to a second voltage end V2. A non-inverting input end of the second comparator 12 is coupled to a third voltage end V3, and an inverting input end of the second comparator 12 is coupled to a fourth voltage end V4. A first input end of the first AND gate 13 is coupled to an output end of the first comparator 11, and a second input end of the first AND gate 13 is coupled to an output end of the second comparator 12.

When a voltage of the first voltage end V1 is higher than a voltage of the second voltage end V2, the first comparator 11 outputs a digital signal 1. When the voltage of the first voltage end V1 is lower than the voltage of the second voltage end V2, the first comparator 11 outputs a digital signal 0. When a voltage of the third voltage end V3 is higher than a voltage of the fourth voltage end V4, the second comparator 12 outputs a digital signal 1. When the voltage of the third voltage end V3 is lower than the voltage of the fourth voltage end V4, the second comparator 12 outputs a digital signal 0.

Therefore, when the voltage of the first voltage end V1 is higher than the voltage of the second voltage end V2, and the voltage of the third voltage end V3 is higher than the voltage of the fourth voltage end V4, the first AND gate 13 outputs a digital signal 1 after performing an AND operation, and the first control end NG1 is at a high level. Otherwise, the first control end NG1 is at a low level.

The second logic circuit 20 includes a third comparator 21, a fourth comparator 22, and a second AND gate 23. A non-inverting input end of the third comparator 21 is coupled to the fourth voltage end V4, and an inverting input end of the third comparator 21 is coupled to the second voltage end V2. A non-inverting input end of the fourth comparator 22 is coupled to the third voltage end V3, and an inverting input end of the fourth comparator 22 is coupled to the first voltage end V1. A first input end of the second AND gate 23 is coupled to an output end of the third comparator 21, and a second input end of the second AND gate 23 is coupled to an output end of the fourth comparator 22.

When the voltage of the fourth voltage end V4 is higher than the voltage of the second voltage end V2, the third comparator 21 outputs a digital signal 1. When the voltage of the fourth voltage end V4 is lower than the voltage of the second voltage end V2, the third comparator 21 outputs a digital signal 0. When the voltage of the third voltage end V3 is higher than the voltage of the first voltage end V1, the fourth comparator 22 outputs a digital signal 1. When the voltage of the third voltage end V3 is lower than the voltage of the first voltage end V1, the fourth comparator 22 outputs a digital signal 0.

Therefore, when the voltage of the fourth voltage end V4 is higher than the voltage of the second voltage end V2, and the voltage of the third voltage end V3 is higher than the voltage of the first voltage end V1, the second AND gate 23 outputs a digital signal 1 after performing an AND operation, and the second control end NG2 is at a high level. Otherwise, the second control end NG2 is at a low level.

The first voltage end V1 is coupled to the first connection point AC1, and receives a square wave signal output by the power receiving circuit. The fourth voltage end V4 is coupled to the second connection point AC2, and receives a square wave signal output by the power receiving circuit. That is, the power receiving circuit provides a differential voltage, and the differential voltage is coupled to the first voltage end V1 and the fourth voltage end V4. The second voltage end V2 is coupled to an output end Vrect of the rectifier circuit. The third voltage end V3 is coupled to a reference ground end VGND.

It is found in practice that when the rectifier control circuit transmits switch control signals to the first control end NG1 and the second control end NG2 of the rectifier circuit, because a wireless charging switching frequency range in the Qi protocol is relatively wide, the rectifier a relatively high operating frequency is not prone to problems.

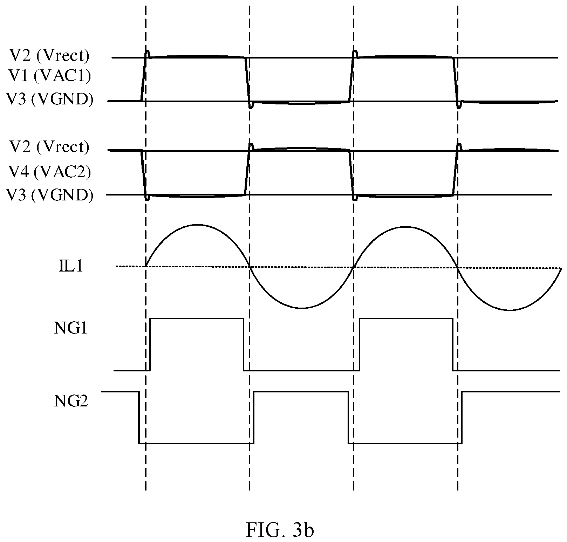

As shown in FIG. 3b, a current flowing through the coil L1 in the power receiving circuit is IL1 in FIG. 3b, and is a current similar to a sine wave. The voltage signal received by the first connection point AC1 of the receiving end and the voltage signal received by the second connection point AC2 are square waves. A direct current voltage generated after the voltage signal received by the first connection point AC1 of the receiving end and the voltage signal received by the second connection point AC2 are rectified by the rectifier circuit is Vrect in FIG. 3b.

However, at a relatively low operating frequency, the rectifier may have a ringing phenomenon. This phenomenon causes great interference to switching logic of the rectifier circuit, and even severely causes output oscillation of the rectifier and affects communication between the power transmitting end and the power receiving end.

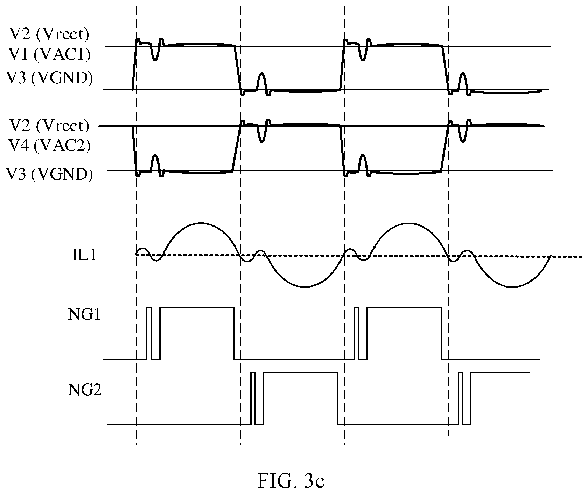

As shown in FIG. 3c, a current generated by the coil L1 in the power receiving circuit is not a standard sine wave, but instead, small sinusoidal currents generated by a parallel resonant capacitor C2 (as shown in FIG. 2) in the power receiving circuit exist on two sides of a large sinusoidal current. The ringing phenomenon causes the rectifier circuit to be on again by small sinusoidal currents caused by parallel resonance shortly after the rectifier circuit is off. Usually, the small sinusoidal currents have a high frequency, and the rectifier circuit needs to be off immediately after the rectifier circuit is on. If the rectifier circuit cannot be off immediately and accurately, a rectification logic error occurs, and causes oscillation of the output Vrect of the rectifier circuit.

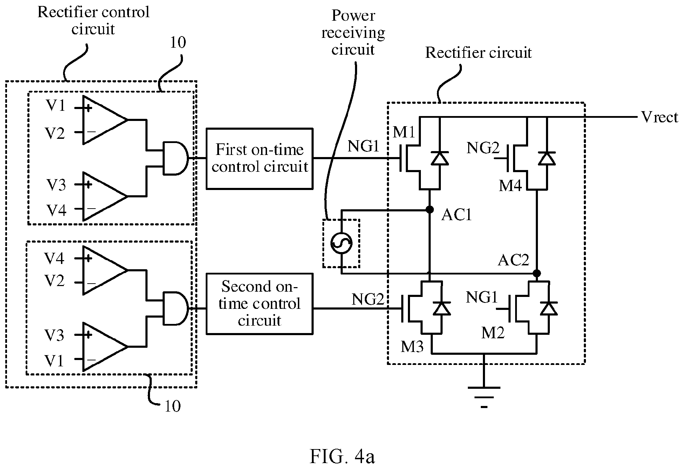

Based on this, in some embodiments, a rectifier control circuit is provided. As shown in FIG. 4a, in addition to the first logic circuit 10 and the second logic circuit 20, the rectifier control circuit further includes a first on-time control circuit and a second on-time control circuit.

The first on-time control circuit is coupled to the first logic circuit 10, and is configured to prolong a duration of an on signal (a high-level signal) output by the first logic circuit 10.

The second on-time control circuit is coupled to the second logic circuit 20, and is configured to prolong a duration of an on signal output by the second logic circuit 20.

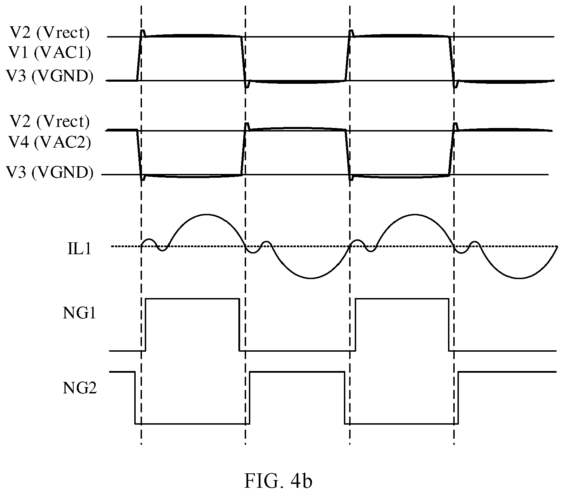

As shown in FIG. 4b, due to sinusoidal currents (small sinusoidal currents existing on two sides of a large sinusoidal current) generated by the parallel resonant capacitor C2 (as shown in FIG. 2) in the power receiving circuit, when the rectifier control circuit outputs an on signal to the first control end NG1 of the rectifier circuit, after the first on-time control circuit is disposed, the output on signal is continuously output (a duration may be set), until a large sinusoidal current generated by the power receiving circuit enables the rectifier control circuit to output an on signal to the first control end NG1 of the rectifier circuit. This avoids a problem that output oscillation of the rectifier is caused by oscillation of an on signal output by the first control end NG1. Similarly, after the second on-time control circuit is disposed, an on signal output by the rectifier control circuit to the first control end NG1 of the rectifier circuit is also in a regular waveform, to avoid a problem that output oscillation of the rectifier is caused by oscillation of an on signal output by the second control end NG2.

However, as shown in FIG. 4b, the first on-time control circuit is used as an example. When the first on-time control circuit controls the rectifier control circuit to continuously output an on signal to the first control end NG1, if a sinusoidal current generated by the parallel resonant capacitor C2 crosses zero (that is, a direction of the current is changed), and the first controllable switching transistor M1 and the second controllable switching transistor M2 in the rectifier circuit are not off, a current backflow is caused. This reduces efficiency, and even may cause a reliability problem of the rectifier if a severe backflow occurs.

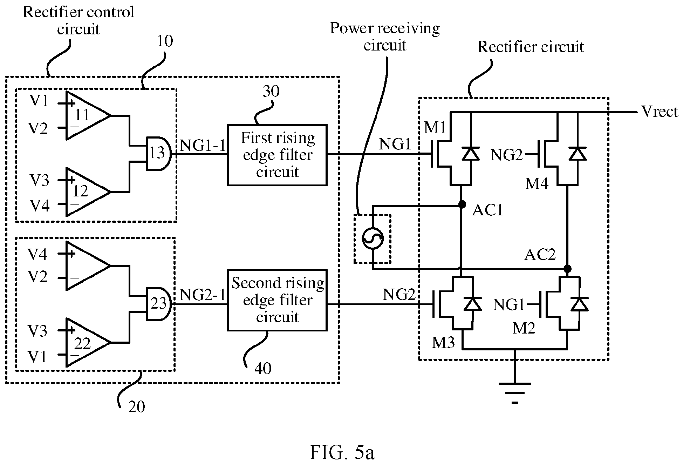

Based on this, as shown in FIG. 5a, an embodiment of this application further provides a rectifier control circuit. In addition to the first logic circuit 10, the rectifier control circuit further includes a first rising edge filter circuit 30.

The first rising edge filter circuit 30 is coupled to an output end NG1-1 of the first AND gate 13 and the first control end NG1, and is configured to receive a digital signal output by the output end NG1-1 of the first AND gate 13, filter out a rising edge signal of the digital signal in the first A ns (A nanoseconds) of each pulse period, generate a switch control signal, and transmit the switch control signal to the first control end NG1.

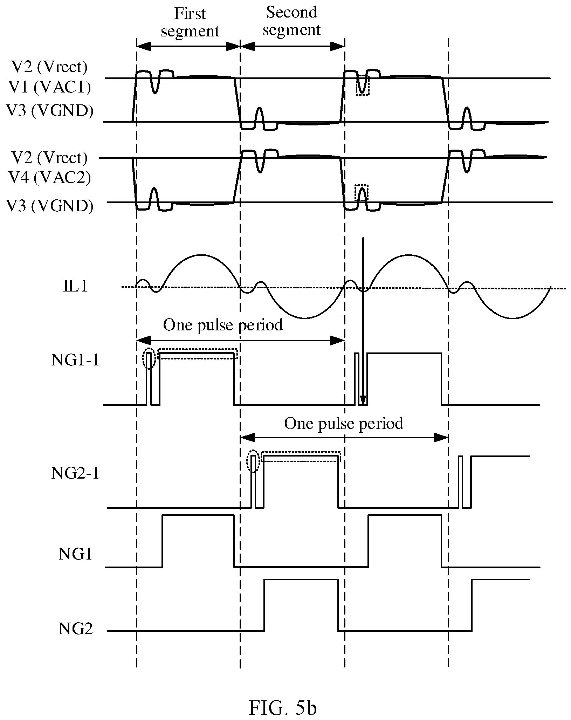

As shown in FIG. 5b, due to a ringing problem of the rectifier, waveform oscillation (for example, at a dotted circle) occurs in the digital signal output by the output end NG1-1 of the first AND gate 13. After the first rising edge filter circuit 30 coupled to the output end NG1-1 of the first AND gate 13 is added, the digital signal output by the output end NG1-1 of the first AND gate 13 is filtered, the rising edge signal in the first A ns of each pulse period is filtered out, and a digital signal after the A ns is normally output. In this way, as shown in FIG. 5b, a high-level signal at the dotted circle in the digital signal output by the output end NG1-1 of the first AND gate 13 can be filtered out, and the switch control signal output by the first rising edge filter circuit 30 to the first control end NG1 presents a regular waveform graph.

A>0. The filtering time A may be adjusted based on a resonance frequency, an output load current, and an output voltage.

For example, in some embodiments, A < 500 ns. By adjusting a value of A, an oscillating high-level signal (the high-level signal at the dotted circle) in the digital signal output by the output end NG1-1 of the first AND gate 13 can be filtered out. A waveform of the switch control signal output by the first rising edge filter circuit 30 to the first control end NG1 varies slightly with different values of A.

Based on this, as shown in FIG. 5a, in addition to the second logic circuit 20, the rectifier control circuit further includes a second rising edge filter circuit 40.

The second rising edge filter circuit 40 is coupled to an output end NG2-1 of the second AND gate 23 and the second control end NG2, and is configured to receive a digital signal output by the output end NG2-1 of the second AND gate 23, filter out a rising edge signal of the digital signal in the first B ns of each pulse period, generate a switch control signal, and transmit the switch control signal to the second control end NG2.

### B>0.

Similarly, as shown in FIG. 5b, due to the ringing problem of the rectifier, waveform oscillation (for example, at a dotted circle) occurs in the digital signal output by the output end NG2-1 of the second AND gate 23. After the second rising edge filter circuit 40 coupled to the output end NG2-1 of the second AND gate 23 is added, the digital signal output by the output end NG2-1 of the second AND gate 23 is filtered, the rising edge signal in the first B ns of each pulse period is filtered out, and a digital signal after the B ns is normally output. In this way, as shown in FIG. 5b, a high-level signal at the dotted circle in the digital signal output by the output end NG2-1 of the second AND gate 23 can be filtered out, and the switch control signal output by the second rising edge filter circuit 40 to the second control end NG2 presents a regular waveform graph.

B>0. The filtering time B is related to the resonance frequency. By adjusting a value of B, an oscillating high-level signal (the high-level signal at the dotted circle) in the digital signal output by the output end NG2-1 of the second AND gate 23 can be filtered out. A waveform of the switch control signal output by the second rising edge filter circuit 40 to the second control end NG2 varies slightly with different values of B.

It should be noted that, as shown in FIG. 5b, if the digital signal output by the output end NG1-1 of the first AND gate 13 and the digital signal output by the output end NG2-1 of the second AND gate 23 have respective pulse periods, A may be equal to B. Certainly, A may alternatively be not equal to B. If both use a same time period as a pulse period, because the digital signal output by the output end NG1-1 of the first AND gate 13 and the digital signal output by the output end NG2-1 of the second AND gate 23 start to output high-level signals at different time points, A is not equal to B.

The following describes a rectifier control circuit driving method provided in an embodiment of this application.

In a process of driving the rectifier control circuit, the non-inverting input end of the first comparator 11 receives a signal of the first voltage end V1, the inverting input end of the first comparator 11 receives a signal of the second voltage end V2, and the first comparator 11 performs a comparison operation on the signals received by the non-inverting input end and the inverting input end, and outputs an operation result from the output end of the first comparator 11.

When the voltage of the first voltage end V1 is higher than the voltage of the second voltage end V2 (V1>V2), the output end of the first comparator 11 outputs a digital signal 1. When the voltage of the first voltage end V1 is lower than the voltage of the second voltage end V2 (V1<V2), the output end of the first comparator 11 outputs a digital signal 0.

The non-inverting input end of the second comparator 12 receives a signal of the third voltage end V3, the inverting input end of the second comparator 12 receives a signal of the fourth voltage end V4, and the second comparator 12 performs a comparison operation on the signals received by the non-inverting input end and the inverting input end, and outputs an operation result from the output end of the second comparator 12.

When the voltage of the third voltage end V3 is higher than the voltage of the fourth voltage end V4 (V3>V4), the output end of the second comparator 12 outputs a digital signal 1. When the voltage of the third voltage end V3 is lower than the voltage of the fourth voltage end V4 (V3<V4), the output end of the second comparator 12 outputs a digital signal 0.

The first input end of the first AND gate 13 receives a signal output by the output end of the first comparator 11, the second input end of the first AND gate 13 receives a signal output by the output end of the second comparator 12, and the first AND gate 13 performs a logic operation on the signals received by the first input end and the second input end, and outputs an operation result from the output end NG1-1 of the first AND gate 13.

When the output end of the first comparator 11 outputs a digital signal 1, and the output end of the second comparator 12 outputs a digital signal 1, after the first AND gate 13 performs an AND logic operation, the output end NG1-1 of the first AND gate 13 outputs a digital signal 1. When the output end of the first comparator 11 outputs a digital signal 1, and the output end of the second comparator 12 outputs a digital signal 0, after the first AND gate 13 performs an AND logic operation, the output end NG1-1 of the first AND gate 13 outputs a digital signal 0.

When the output end of the first comparator 11 outputs a digital signal 0, and the output end of the second comparator 12 outputs a digital signal 1, after the first AND gate 13 performs an AND logic operation, the output end NG1-1 of the first AND gate 13 outputs a digital signal 0. When the output end of the first comparator 11 outputs a digital signal 0, and the output end of the second comparator 12 outputs a digital signal 0, after the first AND gate 13 performs an AND logic operation, the output end NG1-1 of the first AND gate 13 outputs a digital signal 0.

As shown in FIG. 5b, because the current IL1 generated by the coil L1 in the power receiving circuit is not a standard sine wave, but instead, small sinusoidal currents generated by the parallel resonant capacitor C2 (as shown in FIG. 2) in the power receiving circuit exist on two sides of a large sinusoidal current, voltages at the first connection point AC1 and the second connection point AC2 correspondingly fluctuate. That is, the voltages of the first voltage end V1 and the fourth voltage end V4 correspondingly fluctuate.

In a waveform graph of the first voltage end V1, at a dotted box, the voltage of the first voltage end V1 is lower than the voltage of the second voltage end V2, and the output end of the first comparator 11 outputs a digital signal 0. In a waveform graph of the fourth voltage end V4, at a dotted box, the voltage of the third voltage end V3 is lower than the voltage of the fourth voltage end V4, and the output end of the second comparator 12 outputs a digital signal 0. In this case, the output end NG1-1 of the first AND gate 13 outputs a digital signal 0 (a position indicated by an arrow at a dotted box in the figure).

In the waveform graph of the first voltage end V1, the voltage of the first voltage end V1 before and after the dotted box is higher than the voltage of the second voltage end V2, and the output end of the first comparator 11 outputs a digital signal 1. In the waveform graph of the fourth voltage end V4, the voltage of the third voltage end V3 before and after the dotted box is higher than the voltage of the fourth voltage end V4, and the output end of the second comparator 12 outputs a digital signal 1. In this case, the output end NG1-1 of the first AND gate 13 outputs a digital signal 1.

Based on this, as shown in FIG. 5b, in the digital signal output by the output end NG1-1 of the first AND gate 13, an oscillating high-level signal (as shown by a dotted circle in FIG. 5b) of a short time period exists before an actually required high-level signal (as shown by a dotted box in FIG. 5b).

The first rising edge filter circuit 30 receives the digital signal output by the output end NG1-1 of the first AND gate 13, filters out a rising edge signal of the digital signal in the first A ns of each pulse period, generates a switch control signal, and transmits the switch control signal to the first control end NG1.

The first rising edge filter circuit 30 receives the digital signal output by the output end NG1-1 of the first AND gate 13, and filters out the oscillating high-level signal in the digital signal output by the output end NG1-1 of the first AND gate 13, so that only the actually required high-level signal is left in high-level signals in the switch control signal output to the first control end NG1.

Similarly, the non-inverting input end of the third comparator 21 receives the signal of the fourth voltage end V4, the inverting input end of the third comparator 21 receives the signal of the second voltage end V2, and the third comparator 21 performs a comparison operation on the signals received by the non-inverting input end and the inverting input end, and outputs an operation result from the output end of the third comparator 21.

When the voltage of the fourth voltage end V4 is higher than the voltage of the second voltage end V2 (V4>V2), the output end of the fourth comparator 22 outputs a digital signal 1. When the voltage of the fourth voltage end V4 is lower than the voltage of the second voltage end V2 (V4<V2), the output end of the fourth comparator 22 outputs a digital signal 0.

The non-inverting input end of the fourth comparator 22 receives the signal of the third voltage end V3, the inverting input end of the fourth comparator 22 receives the signal of the first voltage end V1, and the fourth comparator 22 performs a comparison operation on the signals received by the non-inverting input end and the inverting input end, and outputs an operation result from the output end of the fourth comparator 22.

When the voltage of the third voltage end V3 is higher than the voltage of the first voltage end V1 (V3>V1), the output end of the fourth comparator 22 outputs a digital signal 1. When the voltage of the third voltage end V3 is lower than the voltage of the first voltage end V1 (V3<V1), the output end of the fourth comparator 22 outputs a digital signal 0.

The first input end of the second AND gate 23 receives a signal output by the output end of the third comparator 21, the second input end of the second AND gate 23 receives a signal output by the output end of the fourth comparator 22, and the second AND gate 23 performs a logic operation on the signals received by the first input end and the second input end, and outputs an operation result from the output end NG2-1 of the second AND gate 23.

When the output end of the third comparator 21 outputs a digital signal 1, and the output end of the fourth comparator 22 outputs a digital signal 1, after the second AND gate 23 performs an AND logic operation, the output end NG2-1 of the second AND gate 23 outputs a digital signal 1. When the output end of the third comparator 21 outputs a digital signal 1, and the output end of the fourth comparator 22 outputs a digital signal 0, after the second AND gate 23 performs an AND logic operation, the output end NG2-1 of the second AND gate 23 outputs a digital signal 0.

When the output end of the third comparator 21 outputs a digital signal 0, and the output end of the fourth comparator 22 outputs a digital signal 1, after the second AND gate 23 performs an AND logic operation, the output end NG2-1 of the second AND gate 23 outputs a digital signal 0. When the output end of the third comparator 21 outputs a digital signal 0, and the output end of the fourth comparator 22 outputs a digital signal 0, after the second AND gate 23 performs an AND logic operation, the output end NG2-1 of the second AND gate 23 outputs a digital signal 0.

As shown in FIG. 5b, in one pulse, a phase difference between the voltages of the first voltage end V1 and the fourth voltage end V4 is about 180°. Based on this, if waveform oscillation is ignored, in a first segment, V1>V2, and V3>V4. The output end NG1-1 of the first AND gate 13 outputs a digital signal 1. In addition, V4<V2, and V3<V 1. The output end NG2-1 of the second AND gate 23 outputs a digital signal 0. In a second segment, V1<V2, and V3<V4. The output end NG1-1 of the first AND gate 13 outputs a digital signal 0. In addition, V4>V2, and V3>V1. The output end NG2-1 of the second AND gate 23 outputs a digital signal 1.

That is, when the first AND gate 13 outputs a digital signal 1, the output end NG2-1 of the second AND gate 23 outputs a digital signal 0. When the first AND gate 13 outputs a digital signal 0, the output end NG2-1 of the second AND gate 23 outputs a digital signal 1.

Due to impact of fluctuations generated by the voltages of the first voltage end V1 and the fourth voltage end V4, as shown in FIG. 5b, in the digital signal output by the output end NG2-1 of the second AND gate 23, an oscillating high-level signal (as shown by a dotted circle in FIG. 5b) of a short time period exists before an actually required high-level signal (as shown by a dotted box in FIG. 5b).

The second rising edge filter circuit 40 receives the digital signal output by the output end NG2-1 of the second AND gate 23, filters out a rising edge signal of the digital signal in the first B ns of each pulse period, generates a switch control signal, and transmits the switch control signal to the second control end NG2.

The second rising edge filter circuit 40 receives the digital signal output by the output end NG2-1 of the second AND gate 23, and filters out the oscillating high-level signal in the digital signal output by the output end NG2-1 of the second AND gate 23, so that only the actually required high-level signal is left in high-level signals in the switch control signal output to the second control end NG2.

According to the rectifier control circuit provided in this embodiment of this application, the first rising edge filter circuit 30 is added between the first AND gate 13 and the first control end NG1, to filter out the oscillating high-level signal in the digital signal output by the output end NG1-1 of the first AND gate 13, so that only the actually required high-level signal is left in the high-level signals in the switch control signal received by the first control end NG1, and a waveform of the switch control signal is regular. In this way, when the ringing phenomenon occurs, the first control end NG1 may be prevented from receiving an on signal, thereby preventing the controllable switching transistors coupled to the first control end NG1 from being on. Only the actually required high-level signal is left in the high-level signals received by the first control end NG1, so that the controllable switching transistors coupled to the first control end NG1 are on in a main power transfer phase, so that an output of the rectifier is stable and has a relatively small fluctuation.

The following describes, by using several detailed embodiments, a rectifier provided in embodiments of this application.

### Embodiment 1

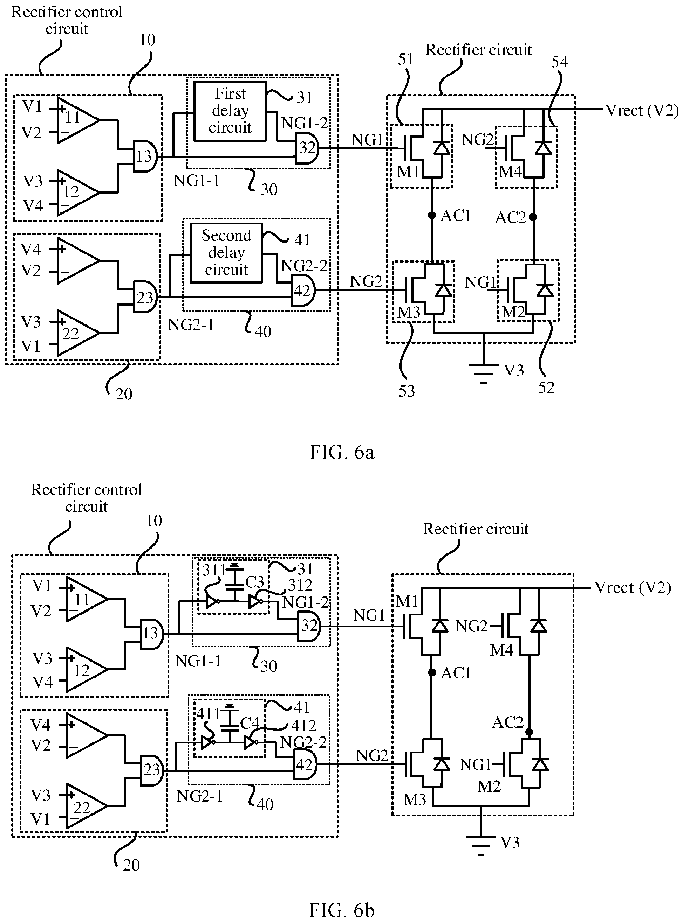

As shown in FIG. 6a, the rectifier includes a rectifier control circuit and a rectifier circuit.

The rectifier control circuit includes a first logic circuit 10, a first rising edge filter circuit 30, a second logic circuit 20, and a second rising edge filter circuit 40.

The first logic circuit 10 includes a first comparator 11, a second comparator 12, and a first AND gate 13.

A non-inverting input end of the first comparator 11 is coupled to a first voltage end V1, and an inverting input end of the first comparator 11 is coupled to a second voltage end V2.

When a voltage of the first voltage end V1 is higher than a voltage of the second voltage end V2, an output end of the first comparator 11 outputs a digital signal 1. When the voltage of the first voltage end V1 is lower than the voltage of the second voltage end V2, the output end of the first comparator 11 outputs a digital signal 0.

A non-inverting input end of the second comparator 12 is coupled to a third voltage end V3, and an inverting input end of the second comparator 12 is coupled to a fourth voltage end V4.

When a voltage of the third voltage end V3 is higher than a voltage of the fourth voltage end V4, an output end of the second comparator 12 outputs a digital signal 1. When the voltage of the third voltage end V3 is lower than the voltage of the fourth voltage end V4, the output end of the second comparator 12 outputs a digital signal 0.

A first input end of the first AND gate 13 is coupled to the output end of the first comparator 11, and a second input end of the first AND gate 13 is coupled to the output end of the second comparator 12.

When the output end of the first comparator 11 outputs a digital signal 1, and the output end of the second comparator 12 outputs a digital signal 1, after the first AND gate 13 performs an AND logic operation, an output end NG1-1 of the first AND gate 13 outputs a digital signal 1. When the output end of the first comparator 11 outputs a digital signal 0, and the output end of the second comparator 12 outputs a digital signal 0, after the first AND gate 13 performs an AND logic operation, the output end NG1-1 of the first AND gate 13 outputs a digital signal 0.

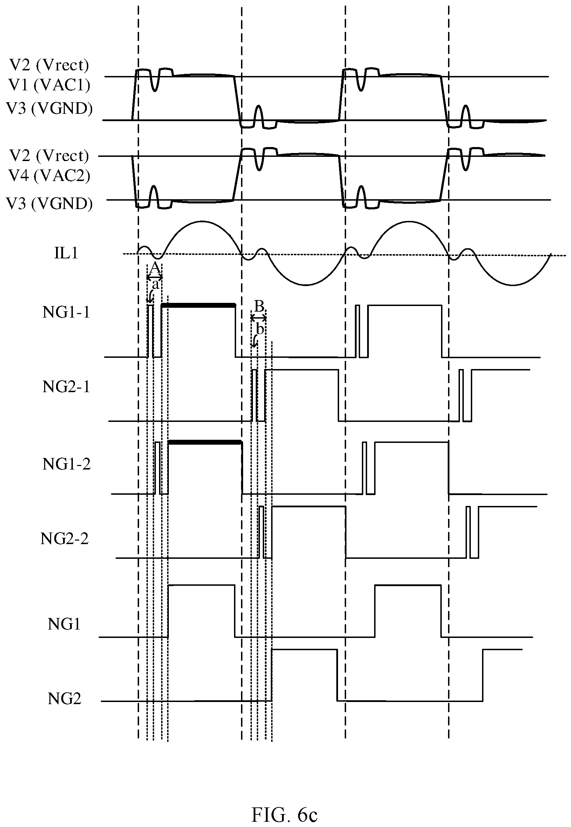

Due to impact of fluctuations generated by the voltages of the first voltage end V1 and the fourth voltage end V4, as shown in FIG. 6c, in the digital signal output by the output end NG1-1 of the first AND gate 13, an oscillating high-level signal of a short time period exists before an actually required high-level signal.

For a structure of the first rising edge filter circuit 30, as shown in FIG. 6a, the first rising edge filter circuit 30 includes a first delay circuit 31 and a third AND gate 32.

The first delay circuit 31 is coupled to the output end NG1-1 of the first AND gate 13 and a first input end of the third AND gate 32.

The first delay circuit 31 receives the digital signal output by the output end NG1-1 of the first AND gate 13, delays, by a ns by using a delay function of the first delay circuit 31, the digital signal output by the output end NG1-1 of the first AND gate 13, and then outputs a delayed digital signal to the first input end of the third AND gate 32.

a<_A. The delayed digital signal is staggered from a high level of the digital signal in the first A ns of each pulse period. By making a greater than a duration of the oscillating high-level signal in the digital signal output by the output end NG1-1 of the first AND gate 13, the oscillating high-level signal in the digital signal output by the output end NG1-1 of the first AND gate 13 can be completely filtered out.

A structure of the first delay circuit 31 is not limited. In some embodiments, as shown in FIG. 6b, the first delay circuit 31 includes a first inverter 311, a second inverter 312, and a third capacitor C3.

The first inverter 311 and the second inverter 312 are connected in series between the output end NG1-1 of the first AND gate 13 and the first input end of the third AND gate 32. One end of the third capacitor C3 is coupled between the first inverter 311 and the second inverter 312, and the other end is coupled to a reference ground end.

A second input end of the third AND gate 32 is further coupled to the output end NG1-1 of the first AND gate 13, and an output end of the third AND gate 32 is coupled to a first control end NG1.

The third AND gate 32 performs a logic operation on the delayed digital signal output by the first delay circuit 31 and the digital signal output by the output end NG1-1 of the first AND gate 13, to filter out a rising edge signal of the digital signal in the first A ns of each pulse period, generates a switch control signal, and transmits the switch control signal to the first control end NG1.

As shown in FIG. 6b, the second input end of the third AND gate 32 is coupled to the output end NG1-1 of the first AND gate 13. That is, the second input end of the third AND gate 32 is coupled to one end of the third capacitor C3. The first input end of the third AND gate 32 is coupled to the other end of the third capacitor C3. That is, the third AND gate 32 performs an AND operation on voltages of two ends of the third capacitor C3, to perform the delay function.

When the digital signal received by the first input end of the third AND gate 32 is 1, and the digital signal received by the second input end of the third AND gate 32 is 1, the switch control signal output by the output end of the third AND gate 32 to the first control end NG1 is 1. When the digital signal received by the first input end of the third AND gate 32 is 0, and the digital signal received by the second input end of the third AND gate 32 is 0, the switch control signal output by the output end of the third AND gate 32 to the first control end NG1 is 0.

When the digital signal received by the first input end of the third AND gate 32 is 1, and the digital signal received by the second input end of the third AND gate 32 is 0, the switch control signal output by the output end of the third AND gate 32 to the first control end NG1 is 0. When the digital signal received by the first input end of the third AND gate 32 is 0, and the digital signal received by the second input end of the third AND gate 32 is 1, the switch control signal output by the output end of the third AND gate 32 to the first control end NG1 is 0.

Based on this, as shown in FIG. 6c, the oscillating high-level signal in the digital signal output by the output end NG1-1 of the first AND gate 13 is completely staggered from an oscillating high-level signal in the delayed digital signal output by the third capacitor C3 (that is, an output end NG1-2 of the first delay circuit 31). The switch control signal output by the output end of the third AND gate 32 to the first control end NG1 is 1 only when the digital signals output by the two are both 1. Otherwise, the switch control signal output by the output end of the third AND gate 32 to the first control end NG1 is 0.

It may be understood that, because a main power transfer phase of the digital signal output by the output end NG1-1 of the first AND gate 13 (a bold part of the digital signal output by the output end NG1-1 of the first AND gate 13 in FIG. 6c) lasts for a relatively long time, even though a main power transfer phase of the delayed digital signal output by the output end NG1-2 of the first delay circuit 31 (a bold part of the delayed digital signal output by the output end NG1-2 of the first delay circuit 31 in FIG. 6c) is delayed and staggered from the main power transfer phase of the digital signal output by the output end NG1-1 of the first AND gate 13, the two signals are both 1 at some time. Therefore, after the third AND gate 32 performs an AND operation, the third AND gate 32 still outputs a digital signal 1 to the first control end NG1.

The second logic circuit 20 includes a third comparator 21, a fourth comparator 22, and a second AND gate 23.

A non-inverting input end of the third comparator 21 is coupled to the fourth voltage end V4, and an inverting input end of the third comparator 21 is coupled to the second voltage end V2.

When the voltage of the fourth voltage end V4 is higher than the voltage of the second voltage end V2, an output end of the second comparator 12 outputs a digital signal 1. When the voltage of the fourth voltage end V4 is lower than the voltage of the second voltage end V2, the output end of the second comparator 12 outputs a digital signal 0.

A non-inverting input end of the fourth comparator 22 is coupled to the third voltage end V3, and an inverting input end of the fourth comparator 22 is coupled to the first voltage end V1.

When the voltage of the third voltage end V3 is higher than the voltage of the first voltage end V1, an output end of the fourth comparator 22 outputs a digital signal 1. When the voltage of the third voltage end V3 is lower than the voltage of the first voltage end V1, the output end of the fourth comparator 22 outputs a digital signal 0.

A first input end of the second AND gate 23 is coupled to the output end of the third comparator 21, and a second input end of the second AND gate 23 is coupled to the output end of the fourth comparator 22.

When the output end of the third comparator 21 outputs a digital signal 1, and the output end of the fourth comparator 22 outputs a digital signal 1, after the second AND gate 23 performs an AND logic operation, an output end NG2-1 of the second AND gate 23 outputs a digital signal 1. When the output end of the third comparator 21 outputs a digital signal 0, and the output end of the fourth comparator 22 outputs a digital signal 0, after the second AND gate 23 performs an AND logic operation, the output end NG2-1 of the second AND gate 23 outputs a digital signal 0.

Due to impact of fluctuations generated by the voltages of the first voltage end V1 and the fourth voltage end V4, as shown in FIG. 6c, in the digital signal output by the output end NG2-1 of the second AND gate 23, an oscillating high-level signal of a short time period exists before an actually required high-level signal.

The second rising edge filter circuit 40 includes a second delay circuit 41 and a fourth AND gate 42.

The second delay circuit 41 is coupled to the output end NG2-1 of the second AND gate 23 and a first input end of the fourth AND gate 42.

The second delay circuit 41 receives the digital signal output by the output end NG2-1 of the second AND gate 23, delays, by b ns by using a delay function of the second delay circuit 41, the digital signal output by the output end NG2-1 of the second AND gate 23, and then outputs a delayed digital signal to the first input end of the fourth AND gate 42.

b<_B. The delayed digital signal is staggered from a high level of the digital signal in the first B ns of each pulse period.

By making b greater than a duration of the oscillating high-level signal in the digital signal output by the output end NG2-1 of the second AND gate 23, the oscillating high-level signal in the digital signal output by the output end NG2-1 of the second AND gate 23 can be completely filtered out.

The second delay circuit 41 is configured to: receive the digital signal output by the output end NG2-1 of the second AND gate 23, delay the digital signal output by the output end NG2-1 of the second AND gate 23, and then output the delayed digital signal to the first input end of the fourth AND gate 42.

A structure of the second delay circuit 41 is not limited. In some embodiments, as shown in FIG. 6b, the second delay circuit 41 includes a third inverter 411, a fourth inverter 412, and a fourth capacitor C4.

The third inverter 411 and the fourth inverter 412 are connected in series between the output end NG2-1 of the second AND gate 23 and the first input end of the fourth AND gate 42. One end of the fourth capacitor C4 is coupled between the third inverter 411 and the fourth inverter 412, and the other end is coupled to the reference ground end.

As shown in FIG. 6c, the digital signal output by the output end NG2-1 of the second AND gate 23 is transmitted to the fourth capacitor C4, and the fourth capacitor C4 is charged. Then, the digital signal output by the output end NG2-1 of the second AND gate 23 is transmitted to the first input end of the fourth AND gate 42. The delayed digital signal output by the fourth capacitor C4 (that is, an output end NG2-2 of the second delay circuit 41) is staggered to some extent from the digital signal output by the output end NG2-1 of the second AND gate 23. By adjusting a size of the fourth capacitor C4, the oscillating high-level signal in the digital signal output by the output end NG2-1 of the second AND gate 23 may be completely staggered from an oscillating high-level signal in the delayed digital signal output by the fourth capacitor C4 (that is, the output end NG2-2 of the second delay circuit 41).

A second input end of the fourth AND gate 42 is further coupled to the output end NG2-1 of the second AND gate 23, and an output end of the fourth AND gate 42 is coupled to a second control end NG2.

The fourth AND gate 42 performs a logic operation on the delayed digital signal output by the second delay circuit 41 and the digital signal output by the output end NG2-1 of the second AND gate 23, to filter out a rising edge signal of the digital signal in the first B ns of each pulse period, generates a switch control signal, and transmits the switch control signal to the second control end NG2.

As shown in FIG. 6b, the second input end of the fourth AND gate 42 is coupled to the output end NG2-1 of the second AND gate 23. That is, the second input end of the fourth AND gate 42 is coupled to one end of the fourth capacitor C4. The first input end of the fourth AND gate 42 is coupled to the other end of the fourth capacitor C4. That is, the fourth AND gate 42 performs an AND operation on voltages of two ends of the fourth capacitor C4, to perform the delay function.

When the digital signal received by the first input end of the fourth AND gate 42 is 1, and the digital signal received by the second input end of the fourth AND gate 42 is 1, the switch control signal output by the output end of the fourth AND gate 42 to the second control end NG2 is 1. When the digital signal received by the first input end of the fourth AND gate 42 is 0, and the digital signal received by the second input end of the fourth AND gate 42 is 0, the switch control signal output by the output end of the fourth AND gate 42 to the second control end NG2 is 0.

When the digital signal received by the first input end of the fourth AND gate 42 is 1, and the digital signal received by the second input end of the fourth AND gate 42 is 0, the switch control signal output by the output end of the fourth AND gate 42 to the second control end NG2 is 0. When the digital signal received by the first input end of the fourth AND gate 42 is 0, and the digital signal received by the second input end of the fourth AND gate 42 is 1, the switch control signal output by the output end of the fourth AND gate 42 to the second control end NG2 is 0.

Based on this, as shown in FIG. 6c, the oscillating high-level signal in the digital signal output by the output end NG2-1 of the second AND gate 23 is completely staggered from the oscillating high-level signal in the delayed digital signal output by the fourth capacitor C4 (that is, the output end NG2-2 of the second delay circuit 41). The switch control signal output by the output end of the fourth AND gate 42 to the second control end NG2 is 1 only when the digital signals output by the two are both 1. Otherwise, the switch control signal output by the output end of the fourth AND gate 42 to the second control end NG2 is 0.

As shown in FIG. 6a, the rectifier circuit includes a first switch 51, a second switch 52, a third switch 53, and a fourth switch 54.

The first switch 51 is configured to connect a first connection point AC 1 and the second voltage end V2, and a control end of the first switch 51 is coupled to the first control end NG1.

The first switch 51 includes, for example, one first controllable switching transistor M1, or a plurality of first controllable switching transistors M1 connected in parallel.

The second switch 52 is configured to connect the third voltage end V3 and a second connection point AC2, and a control end of the second switch 52 is coupled to the first control end NG1.

The second switch 52 includes, for example, one second controllable switching transistor M2, or a plurality of second controllable switching transistors M2 connected in parallel.

The third switch 53 is configured to connect the first connection point AC1 and the third voltage end V3, and a control end of the third switch 53 is coupled to the second control end NG2 of the rectifier control circuit.

The third switch 53 includes, for example, one third controllable switching transistor M3, or a plurality of third controllable switching transistors M3 connected in parallel.

The fourth switch 54 is configured to connect the second connection point AC2 and the second voltage end V2, and the fourth switch 54 is coupled to the second control end NG2.

The fourth switch 54 includes, for example, one fourth controllable switching transistor M4, or a plurality of fourth controllable switching transistors M4 connected in parallel.

As shown in FIG. 6a, the first voltage end V1 of the rectifier control circuit is coupled to the first connection point AC1, and the fourth voltage end V4 of the rectifier control circuit is coupled to the second connection point AC2.

The second voltage end V2 is an output voltage end of the rectifier circuit.

It can be learned from the foregoing description about FIG. 6c that when the switch control signal received by the first control end NG1 is 1, the switch control signal received by the second control end NG2 is 0. When the switch control signal received by the first control end NG1 is 0, the switch control signal received by the second control end NG2 is 1. That is, turn-on of the first switch 51 and the second switch 52 that are controlled by the first control end NG1 is staggered from that of the third switch 53 and the fourth switch 54 that are controlled by the second control end NG2.

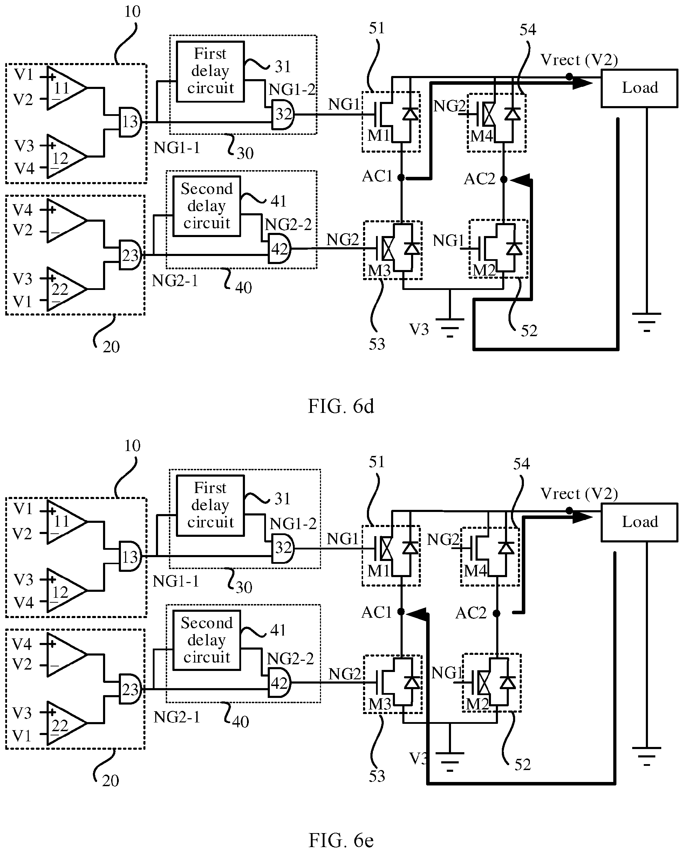

Based on this, as shown in FIG. 6d, the switch control signal received by the first control end NG1 is 1, and the switch control signal received by the second control end NG2 is 0. The third switch 53 and the fourth switch 54 are off, and the first switch 51 and the second switch 52 are on. A loop formed is shown by arrows in FIG. 6d. In this case, a high-level signal of the first connection point AC 1 is transmitted to the second voltage end V2 (an output end Vrect of the rectifier circuit). Similarly, as shown in FIG. 6e, the switch control signal received by the first control end NG1 is 0, and the switch control signal received by the second control end NG2 is 1. The first switch 51 and the second switch 52 are off, and the third switch 53 and the fourth switch 54 are on. A loop formed is shown by arrows in FIG. 6e. In this case, a high-level signal of the second connection point AC2 is transmitted to the second voltage end V2 (the output end Vrect of the rectifier circuit).

In this way, as shown in FIG. 6c, after alternating current voltages at the first connection point AC1 and the second connection point AC2 are rectified by the rectifier circuit, the output end Vrect outputs a direct current voltage.

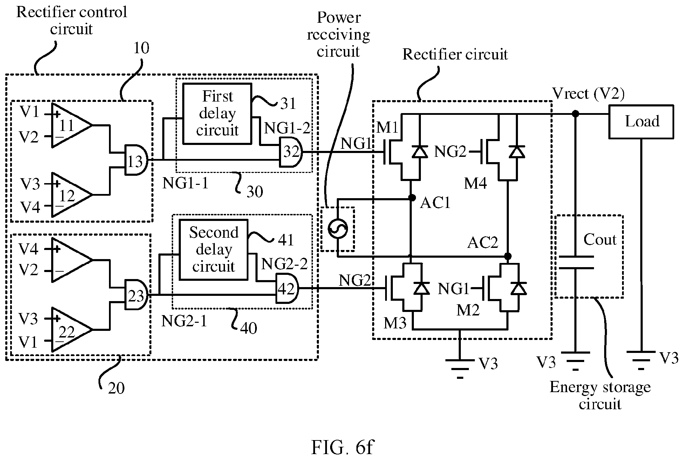

In some embodiments, as shown in FIG. 6f, the rectifier further includes an energy storage circuit. The energy storage circuit is coupled to the second voltage end V2 and the third voltage end V3, and is configured to buffer an electrical signal of the second voltage end V2, and release an electrical signal stored in the energy storage circuit.

A structure of the energy storage circuit is not limited. As shown in FIG. 6f, the energy storage circuit may include, for example, an output capacitor Cout.

The second voltage end V2 (which may also be understood as an output end of the rectifier) of the rectifier is coupled to a load, and is configured to transmit an electrical signal to the load. When neither the first connection point AC1 nor the second connection point AC2 can transmit an electrical signal to the second voltage end V2, the energy storage circuit releases the electrical signal stored in the energy storage circuit, to supply power to the load.

When the rectifier provided in this embodiment of this application is applied to the device, as shown in FIG. 6f, the first connection point AC 1 and the second connection point AC2 of the rectifier are coupled to the power receiving circuit in the device, and electrical signals of the first connection point AC1 and the second connection point AC2 come from the power receiving circuit.

According to the rectifier provided in this embodiment of this application, the first delay circuit 31 is added to the rectifier control circuit, so that the oscillating high-level signal in the delayed digital signal output by the output end NG1-2 of the first delay circuit 31 may be staggered from the oscillating high-level signal in the digital signal output by the output end NG1-1 of the first AND gate 13. After an AND operation is performed on the delayed digital signal output by the output end NG1-2 of the first delay circuit 31 and the digital signal output by the output end NG1-1 of the first AND gate 13, the oscillating high-level signal can be filtered out, so that the rectifier control circuit outputs a regular switch control signal to the first control end NG1.

Similarly, the second delay circuit 41 is added to the rectifier control circuit, so that the oscillating high-level signal in the delayed digital signal output by the output end NG2-2 of the second delay circuit 41 may be staggered from the oscillating high-level signal in the digital signal output by the output end NG2-1 of the second AND gate 23. After an AND operation is performed on the delayed digital signal output by the output end NG2-2 of the second delay circuit 41 and the digital signal output by the output end NG2-1 of the second AND gate 23, the oscillating high-level signal in the digital signal output by the output end NG2-1 of the second AND gate 23 can be filtered out, so that the rectifier control circuit outputs a regular switch control signal to the second control end NG2.

### Embodiment 2

A same part between Embodiment 2 and Embodiment 1 lies in that the rectifier circuit has a same structure.

A difference between Embodiment 2 and Embodiment 1 lies in that the first rising edge filter circuit 30 in the rectifier control circuit has a different structure.

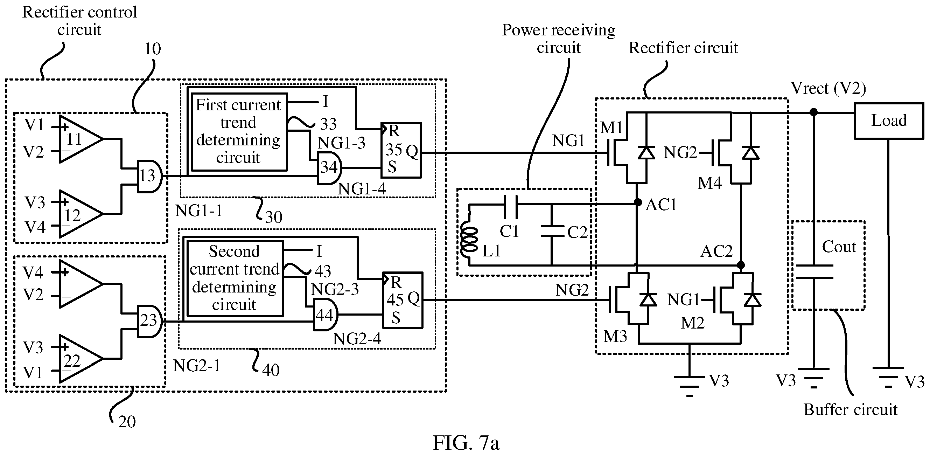

As shown in FIG. 7a, the rectifier includes a rectifier control circuit and a rectifier circuit.

The rectifier control circuit includes a first logic circuit 10, a first rising edge filter circuit 30, a second logic circuit 20, and a second rising edge filter circuit 40.

For a structure of the first logic circuit 10 and a structure of the second logic circuit 20, which may be the same as those in Embodiment 1, refer to the descriptions about the first logic circuit 10 and the second logic circuit 20 in Embodiment 1. Details are not described herein again.

The first rising edge filter circuit 30 includes a first current trend determining circuit 33, a fifth AND gate 34, and a first flip-flop 35.

The first current trend determining circuit 33 is coupled to a current end I and a first input end of the fifth AND gate 34. The first current trend determining circuit 33 is configured to receive and process a signal of the current end I. When the signal of the current end I presents a rising trend, an output end NG1-3 of the first current trend determining circuit 33 inputs a digital signal 1 to the first input end of the fifth AND gate 34. When the signal of the current end I presents a falling trend, the output end NG1-3 of the first current trend determining circuit 33 inputs a digital signal 0 to the first input end of the fifth AND gate 34.

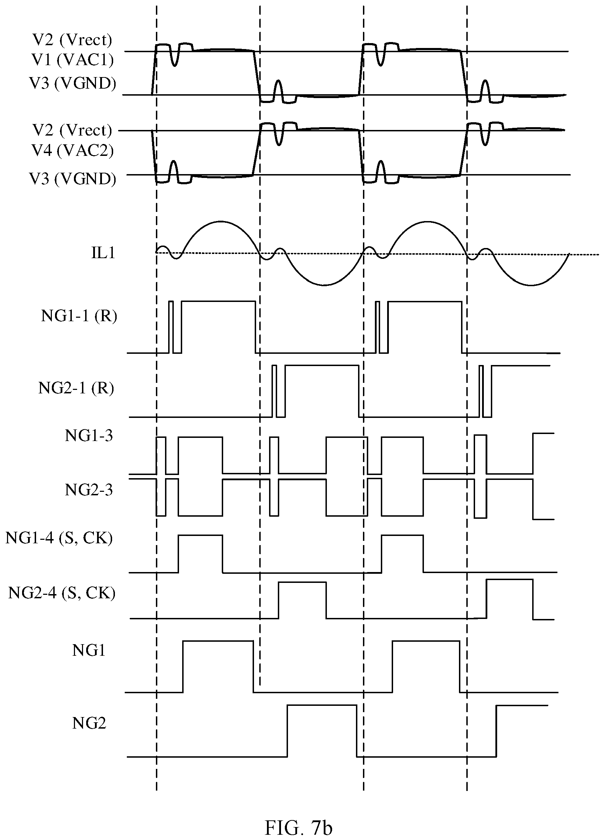

The power receiving circuit of the device receives an alternating magnetic field sent from the power transmitting circuit of the power transmitting end and outputs an alternating current. A current flowing through the coil L1 in the power receiving circuit is IL1 in FIG. 7b, and is a current similar to a sine wave. The current IL1 of the coil L1 includes a phase presenting a rising trend and a phase presenting a falling trend.

The current end I in the first current trend determining circuit 33 may be coupled to the coil L1 in the power receiving circuit, and is configured to receive the current IL1 that is output by the coil L1 and that is similar to a sine wave.

The first current trend determining circuit 33 determines a change trend of the current IL1 output by the coil L1. When the signal of the current end I presents a rising trend, the output end NG1-3 of the first current trend determining circuit 33 inputs a digital signal 1 to the first input end of the fifth AND gate 34. When the signal of the current end I presents a falling trend, the output end NG1-3 of the first current trend determining circuit 33 inputs a digital signal 0 to the first input end of the fifth AND gate 34.

A structure of the first current trend determining circuit 33 is not limited, for example, may be a digital circuit or an analog circuit.

For example, the first current trend determining circuit 33 calculates a first-order derivative (that is, a slope) of the current IL1 output by the coil L1, and determines whether the first-order derivative of the current IL1 output by the coil L1 is greater than 0, to determine the trend of the current IL1 output by the coil L1. When the first-order derivative of the current IL1 output by the coil L1 is greater than 0, it is determined that the current IL1 output by the coil L1 presents a rising trend, and the output end NG1-3 of the first current trend determining circuit 33 inputs a digital signal 1 to the first input end of the fifth AND gate 34. When the first-order derivative of the current IL1 output by the coil L1 is less than 0, it is determined that the current IL1 output by the coil L1 presents a falling trend, and the output end NG1-3 of the first current trend determining circuit 33 inputs a digital signal 0 to the first input end of the fifth AND gate 34.

Alternatively, the first current trend determining circuit 33 samples the current IL1 output by the coil L1, and compares a current current value with a next current value, to determine the trend of the current IL1 output by the coil L1. When the next current value is greater than the current current value, it is determined that the current IL1 output by the coil L1 presents a rising trend, and the output end NG1-3 of the first current trend determining circuit 33 inputs a digital signal 1 to the first input end of the fifth AND gate 34. When the next current value is less than the current current value, it is determined that the current IL1 output by the coil L1 presents a falling trend, and the output end NG1-3 of the first current trend determining circuit 33 inputs a digital signal 0 to the first input end of the fifth AND gate 34.

Certainly, the first current trend determining circuit 33 may alternatively determine the trend of the current of the current end I in another manner. The foregoing descriptions are only examples, and do not constitute limitations.

A second input end of the fifth AND gate 34 is coupled to the output end NG1-1 of the first AND gate 13, and an output end NG1-4 of the fifth AND gate 34 is coupled to a set end S of the first flip-flop 35.

The fifth AND gate 34 performs a logic operation on the digital signal output by the output end NG1-1 of the first AND gate 13 and the signal output by the first current trend determining circuit 33, and outputs an operation result to the set end S of the first flip-flop 35.

As shown in FIG. 7b, an oscillating high-level signal in the digital signal output by the output end NG1-1 of the first AND gate 13 always appears in a phase in which the current IL1 output by the coil L1 presents a falling trend. When the signal of the current end I presents a falling trend, the output end NG1-3 of the first current trend determining circuit 33 inputs a digital signal 0 to the first input end of the fifth AND gate 34.

In this case, when the oscillating high-level signal in the digital signal output by the output end NG1-1 of the first AND gate 13 appears, a digital signal 1 is input to the second input end of the fifth AND gate 34, while the output end NG1-3 of the first current trend determining circuit 33 inputs the digital signal 0 to the first input end of the fifth AND gate 34. After an AND operation is performed by the fifth AND gate 34, the output end NG1-4 of the fifth AND gate 34 outputs a digital signal 0 to the set end S of the first flip-flop 35. In this way, the oscillating high-level signal in the digital signal output by the output end NG1-1 of the first AND gate 13 can be filtered out, to filter out a rising edge signal of the digital signal in the first A ns of each pulse period.

A reset end R of the first flip-flop 35 is coupled to the output end NG1-1 of the first AND gate 13, and an output end Q of the first flip-flop 35 is coupled to the first control end NG1.

That is, the first flip-flop 35 generates a switch control signal based on signals of the reset end R and the set end S, and transmits the switch control signal from the output end Q to the first control end NG1.

For a structure of the first flip-flop 35, in a possible embodiment, as shown in FIG. 7a, the first flip-flop 35 is a first RS flip-flop (latch). According to a principle of an RS flip-flop, when the digital signal received by the set end S of the first RS flip-flop is 1, and the digital signal received by the reset end R of the first RS flip-flop is also 1, the output end Q of the first RS flip-flop outputs a digital signal 1 to the first control end NG1. When the digital signal received by the set end S of the first RS flip-flop is 0, and the digital signal received by the reset end R of the first RS flip-flop is also 0, the output end Q of the first RS flip-flop outputs a digital signal 0 to the first control end NG1.

When the digital signal received by the set end S of the first RS flip-flop is 0, and the digital signal received by the reset end R of the first RS flip-flop is 1, the output end Q of the first RS flip-flop follows a previous output state.

As shown in FIG. 7b, when the digital signal received by the reset end R of the first RS flip-flop is an oscillating high-level signal, the digital signal received by the set end S of the first RS flip-flop is 0, and the output end Q of the first RS flip-flop follows a previous output state. In the previous output state, the digital signal received by the set end S of the first RS flip-flop is 0, the digital signal received by the reset end R of the first RS flip-flop is also 0, and the output end Q of the first RS flip-flop outputs a digital signal 0 to the first control end NG1. Therefore, when the digital signal received by the reset end R of the first RS flip-flop is the oscillating high-level signal, the output end Q of the first RS flip-flop outputs the digital signal 0 to the first control end NG1.

As shown in FIG. 7b, when the digital signal received by the reset end R of the first RS flip-flop is an actually required high-level signal, the digital signal received by the set end S of the first RS flip-flop is 1 at first. In this case, the output end Q of the first RS flip-flop outputs a digital signal 1 to the first control end NG1. Then, the digital signal received by the set end S of the first RS flip-flop changes to 0. In this case, the output end Q of the first RS flip-flop follows a previous output state, and the output end Q of the first RS flip-flop still outputs the digital signal 1 to the first control end NG1.

If the digital signal received by the reset end R of the first RS flip-flop is 0, that is, the digital signal output by the output end NG1-1 of the first AND gate 13 is 0, the digital signal output by the output end NG1-4 of the fifth AND gate 34 is definitely 0, that is, the digital signal received by the set end S of the first RS flip-flop is definitely 0. Therefore, based on the rectifier control circuit provided in this embodiment of this application, a state in which the digital signal received by the set end S of the first RS flip-flop is 1 and the digital signal received by the reset end R of the first RS flip-flop is 0 does not occur.

Based on this, as shown in FIG. 7b, in the switch control signal generated by the first RS flip-flop based on the signals of the reset end R and the set end S, the oscillating high-level signal is filtered out, and only the actually required high-level signal is retained.

As shown in FIG. 7b, when the oscillating high-level signal in the digital signal output by the output end NG1-1 of the first AND gate 13 appears, the current (the current IL1 output by the coil L1) of the current end I presents a falling trend. When the actually required high-level signal in the digital signal output by the output end NG1-1 of the first AND gate 13 appears, the current of the current end I presents a rising trend. Therefore, the first current trend determining circuit 33 determines the trend of the current of the current end I, and the first current trend determining circuit 33 outputs a digital signal 1 only when the current of the current end I presents a rising trend.

After the fifth AND gate 34 performs an AND operation on the digital signal output by the first current trend determining circuit 33 and the digital signal output by the output end NG1-1 of the first AND gate 13, the oscillating high-level signal in the digital signal output by the output end NG1-1 of the first AND gate 13 can be filtered out. The set end S of the first RS flip-flop receives the digital signal output by the output end NG1-4 of the fifth AND gate 34, and the reset end R of the first RS flip-flop receives the digital signal output by the output end NG1-1 of the first AND gate 13. Based on a holding function of the first RS flip-flop, when the digital signal received by the set end S is 0 and the digital signal received by the reset end R is 1, the output end Q follows a previous output state. Therefore, when the current of the current end I is in a rising part phase of the sine wave, the switch control signal output by the output end Q of the first RS flip-flop is always 1.

In this way, the oscillating high-level signal in the digital signal output by the output end NG1-1 of the first AND gate 13 can be filtered out, to avoid an unstable output of the rectifier caused by the ringing problem. In addition, only the oscillating high-level signal in the digital signal output by the output end NG1-1 of the first AND gate 13 is filtered out, and the actually required high-level signal is not filtered out, so that no power waste is caused.

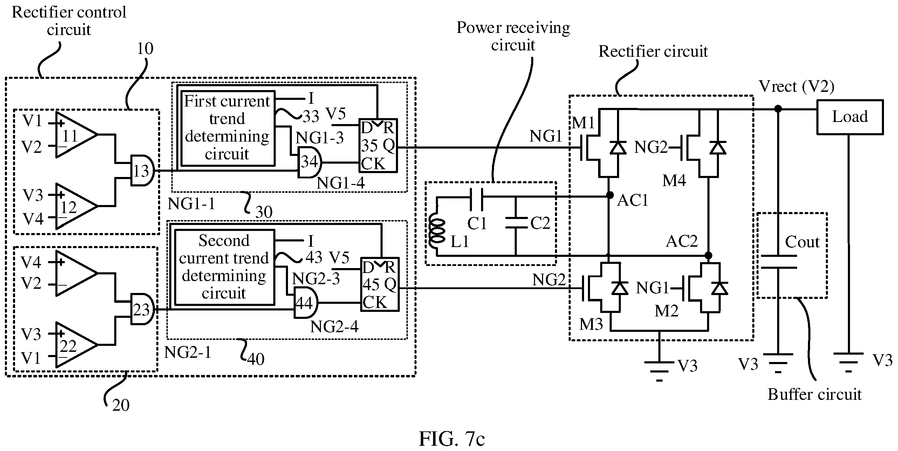

For a structure of the first flip-flop 35, in another possible embodiment, as shown in FIG. 7c, the first flip-flop 35 is a first D flip-flop.

According to a principle of a D flip-flop, when a digital signal received by a reset end R of the first D flip-flop is 1, at a rising edge moment of a signal received by a clock end CK, serving as a set end S, of the first D flip-flop, an output end Q of the first D flip-flop outputs a signal received by an input end D (a fifth voltage end V5 coupled to the input end D is a fixed high-level signal end, for example, inputting a digital signal 1). When the digital signal received by the reset end R of the first D flip-flop is 0, regardless of whether the digital signal received by the clock end CK of the first D flip-flop is 1 or 0, the output end Q of the first D flip-flop always outputs a digital signal 0. When a digital signal received by the clock end CK of the first D flip-flop is 0, and the digital signal received by the reset end R of the first D flip-flop is 1, the output end Q of the first D flip-flop follows a previous output state.

Based on this, as shown in FIG. 7b, when the digital signal received by the reset end R of the first D flip-flop is an oscillating high-level signal, the digital signal received by the clock end CK of the first D flip-flop is 0, and the output end Q of the first D flip-flop follows a previous output state. In the previous output state, the digital signal received by the reset end R of the first D flip-flop is 0, and the output end Q of the first D flip-flop outputs a digital signal 0 to the first control end NG1. Therefore, when the digital signal received by the reset end R of the first D flip-flop is the oscillating high-level signal, the output end Q of the first D flip-flop outputs the digital signal 0 to the first control end NG1.

Certainly, the first flip-flop 35 may alternatively be another flip-flop. This is not limited in this embodiment of this application. The foregoing two flip-flops are merely examples. As shown in FIG. 7a, the second rising edge filter circuit 40 includes a second current trend determining circuit 43, a sixth AND gate 44, and a second flip-flop 45.

The second current trend determining circuit 43 is coupled to the current end I and a first input end of the sixth AND gate 44. The second current trend determining circuit 43 is configured to receive and process the signal of the current end I. When the signal of the current end I presents a rising trend, an output end NG2-3 of the second current trend determining circuit 43 inputs 0 to the first input end of the sixth AND gate 44. When the signal of the current end I presents a falling trend, the output end NG2-3 of the second current trend determining circuit 43 inputs 1 to the first input end of the sixth AND gate 44.

The second current trend determining circuit 43 and the first current trend determining circuit 33 may be connected to the same current end I, that is, both may be connected to the coil L1 in the power receiving circuit.

For a structure and a principle of the second current trend determining circuit 43, which may be the same as those of the first current trend determining circuit 33, refer to the description about the first current trend determining circuit 33. Details are not described herein again.

A second input end of the sixth AND gate 44 is coupled to the output end NG 1-1 of the first AND gate 13, and an output end NG2-4 of the sixth AND gate 44 is coupled to a set end of the second flip-flop 45.

The sixth AND gate 44 performs a logic operation on the digital signal output by the output end NG2-1 of the second AND gate 23 and the signal output by the second current trend determining circuit 43, and outputs an operation result to the set end of the second flip-flop 45.

As shown in FIG. 7b, an oscillating high-level signal in the digital signal output by the output end NG2-1 of the second AND gate 23 always appears in a phase in which the current IL1 output by the coil L1 presents a rising trend. When the signal of the current end I presents a rising trend, the output end NG2-3 of the second current trend determining circuit 43 inputs a digital signal 0 to the first input end of the sixth AND gate 44.

In this case, when the oscillating high-level signal in the digital signal output by the output end NG2-1 of the second AND gate 23 appears, a digital signal 1 is input to the second input end of the sixth AND gate 44, while the output end NG2-3 of the second current trend determining circuit 43 inputs the digital signal 0 to the first input end of the sixth AND gate 44. After an AND operation is performed by the sixth AND gate 44, the output end NG2-4 of the sixth AND gate 44 outputs a digital signal 0 to the set end of the second flip-flop 45. In this way, the oscillating high-level signal in the digital signal output by the output end NG2-1 of the second AND gate 23 can be filtered out, to filter out a rising edge signal of the digital signal in the first B ns of each pulse period.

A reset end of the second flip-flop 45 is coupled to the output end NG2-1 of the second AND gate 23, and an output end of the second flip-flop 45 is coupled to the second control end NG2.

That is, the second flip-flop 45 generates a switch control signal based on signals of the reset end and the set end, and transmits the switch control signal from the output end to the second control end NG2.

For a structure of the second flip-flop 45, in a possible embodiment, as shown in FIG. 7c, the second flip-flop 45 is a second RS flip-flop.

Similarly, according to the principle of the RS flip-flop, when the digital signal received by the set end S of the second RS flip-flop is 1, and the digital signal received by the reset end R of the second RS flip-flop is also 1, the output end of the second RS flip-flop outputs a digital signal 1 to the second control end NG2. When the digital signal received by the set end S of the second RS flip-flop is 0, and the digital signal received by the reset end R of the second RS flip-flop is also 0, the output end of the second RS flip-flop outputs a digital signal 0 to the second control end NG2.

When the digital signal received by the set end S of the second RS flip-flop is 0, and the digital signal received by the reset end R of the second RS flip-flop is 1, the output end of the second RS flip-flop follows a previous output state.

As shown in FIG. 7b, when the digital signal received by the reset end R of the second RS flip-flop is an oscillating high-level signal, the digital signal received by the set end S of the second RS flip-flop is 0, and the output end of the second RS flip-flop follows a previous output state. In the previous output state, the digital signal received by the set end S of the second RS flip-flop is 0, the digital signal received by the reset end R of the second RS flip-flop is also 0, and the output end of the second RS flip-flop outputs a digital signal 0 to the second control end NG2. Therefore, when the digital signal received by the reset end R of the second RS flip-flop is the oscillating high-level signal, the output end of the second RS flip-flop still outputs the digital signal 0 to the second control end NG2.

As shown in FIG. 7b, when the digital signal received by the reset end R of the second RS flip-flop is an actually required high-level signal, the digital signal received by the set end S of the second RS flip-flop is 1 at first. In this case, the output end of the second RS flip-flop outputs a digital signal 1 to the second control end NG2. Then, the digital signal received by the set end S of the second RS flip-flop changes to 0. In this case, the output end of the second RS flip-flop follows a previous output state, and the output end of the second RS flip-flop still outputs the digital signal 1 to the second control end NG2.

If the digital signal received by the reset end R of the second RS flip-flop is 0, that is, the digital signal output by the output end NG2-1 of the second AND gate 23 is 0, the digital signal output by the output end NG2-4 of the sixth AND gate 44 is definitely 0, that is, the digital signal received by the set end S of the second RS flip-flop is definitely 0. Therefore, based on the rectifier control circuit provided in this embodiment of this application, a state in which the digital signal received by the set end S of the second RS flip-flop is 1 and the digital signal received by the reset end R of the second RS flip-flop is 0 does not occur.

Based on this, as shown in FIG. 7b, in the switch control signal generated by the second RS flip-flop based on the signals of the reset end R and the set end S, the oscillating high-level signal is filtered out, and only the actually required high-level signal is retained.

Similarly, when the oscillating high-level signal in the digital signal output by the output end NG2-1 of the second AND gate 23 appears, the current of the current end I presents a rising trend. When the actually required high-level signal in the digital signal output by the output end NG2-1 of the second AND gate 23 appears, the current of the current end I presents a falling trend. Under a joint action of the second current trend determining circuit 43, the sixth AND gate 44, and the second RS flip-flop, the oscillating high-level signal in the digital signal output by the output end NG2-1 of the second AND gate 23 is filtered out, to avoid an unstable output of the rectifier caused by the ringing problem.

For a structure of the second flip-flop 35, in another possible embodiment, as shown in FIG. 7c, the second flip-flop 45 is a second D flip-flop.

According to the principle of the D flip-flop, when a digital signal received by a reset end R of the second D flip-flop is 1, at a rising edge moment of a signal received by a clock end CK, serving as a set end S, of the second D flip-flop, an output end Q of the second D flip-flop outputs a signal of an input end D (the fifth voltage end V5 coupled to the input end D is a fixed high-level signal end, for example, inputting a digital signal 1). When the digital signal received by the reset end R of the second D flip-flop is 0, regardless of whether the digital signal received by the clock end CK of the second D flip-flop is 1 or 0, the output end Q of the second D flip-flop always outputs a digital signal 0. When the digital signal received by the clock end CK of the second D flip-flop is 0, and the digital signal received by the reset end R of the second D flip-flop is 1, the output end Q of the second D flip-flop follows a previous output state.

Based on this, as shown in FIG. 7b, when the digital signal received by the reset end R of the second D flip-flop is an oscillating high-level signal, the digital signal received by the clock end CK of the second D flip-flop is 0, and the output end Q of the second D flip-flop follows a previous output state. In the previous output state, the digital signal received by the reset end R of the second D flip-flop is 0, and the output end Q of the second D flip-flop outputs a digital signal 0 to the second control end NG2. Therefore, when the digital signal received by the reset end R of the second D flip-flop is the oscillating high-level signal, the output end Q of the second D flip-flop outputs the digital signal 0 to the second control end NG2.

Certainly, the second flip-flop 45 may alternatively be another flip-flop. This is not limited in this embodiment of this application. The foregoing two flip-flops are merely examples.

In this embodiment of this application, when the oscillating high-level signal in the digital signal output by the output end NG 1-1 of the first AND gate 13 appears, the current of the current end I presents a falling trend. When the actually required high-level signal in the digital signal output by the output end NG1-1 of the first AND gate 13 appears, the current of the current end I presents a rising trend. Under a joint action of the first current trend determining circuit 33, the fifth AND gate 34, and the first flip-flop 35, the oscillating high-level signal in the digital signal output by the output end NG 1-1 of the first AND gate 13 is filtered out, to avoid an unstable output of the rectifier caused by the ringing problem.

Similarly, when the oscillating high-level signal in the digital signal output by the output end NG2-1 of the second AND gate 23 appears, the current of the current end I presents a rising trend. When the actually required high-level signal in the digital signal output by the output end NG2-1 of the second AND gate 23 appears, the current of the current end I presents a falling trend. Under a joint action of the second current trend determining circuit 43, the sixth AND gate 44, and the second flip-flop 45, the oscillating high-level signal in the digital signal output by the output end NG2-1 of the second AND gate 23 is filtered out, to avoid an unstable output of the rectifier caused by the ringing problem.

### Embodiment 3

A difference between Embodiment 3 and Embodiment 2 lies in that the second rising edge filter circuit 40 has a different structure.

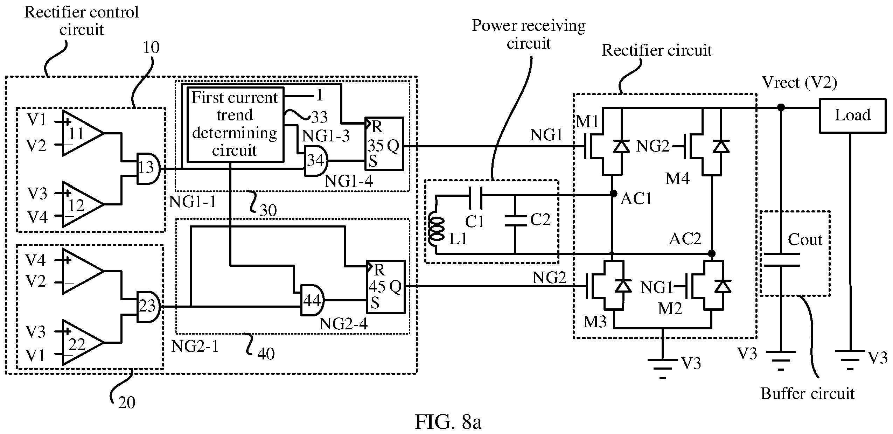

As shown in FIG. 8a, the second rising edge filter circuit 40 includes a sixth AND gate 44 and a second flip-flop 45.

The first current trend determining circuit 33 is further coupled to a first input end of the sixth AND gate 44. The first current trend determining circuit 33 is further configured to: when the signal of the current end I presents a rising trend, input 0 to the first input end of the sixth AND gate 44 by the output end NG1-3 of the first current trend determining circuit 33; and when the signal of the current end I presents a falling trend, input 1 to the first input end of the sixth AND gate 44 by the output end NG1-3 of the first current trend determining circuit 33.

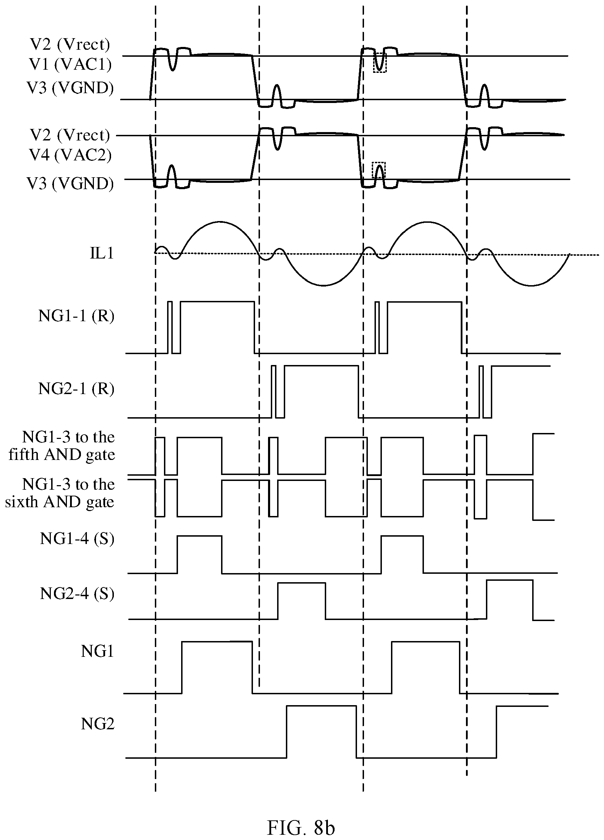

That is, as shown in FIG. 8b, the first current trend determining circuit 33 receives and processes the signal of the current end I. When the signal of the current end I presents a rising trend, the output end NG1-3 of the first current trend determining circuit 33 inputs 1 to the first input end of the fifth AND gate 34, and inputs 0 to the first input end of the sixth AND gate 44. When the signal of the current end I presents a falling trend, the output end NG1-3 of the first current trend determining circuit 33 inputs 0 to the first input end of the fifth AND gate 34, and inputs 1 to the first input end of the sixth AND gate 44.

A second input end of the sixth AND gate 44 is coupled to the output end NG1-1 of the first AND gate 13, and an output end NG2-4 of the sixth AND gate 44 is coupled to a set end S of the second flip-flop 45.

The sixth AND gate 44 performs a logic operation on the digital signal output by the output end NG2-1 of the second AND gate 23 and the signal output by the first current trend determining circuit 33, to filter out a rising edge signal of the digital signal in the first B ns of each pulse period, and outputs an operation result to the set end S of the second flip-flop 45.

A reset end R of the second flip-flop 45 is coupled to the output end NG2-1 of the second AND gate 23, and an output end of the second flip-flop 45 is coupled to the second control end NG2. The second flip-flop 45 generates a switch control signal based on signals of the reset end R and the set end S, and transmits the switch control signal to the second control end NG2.

For structures and principles of the sixth AND gate 44 and the second flip-flop 45, which are the same as those in Embodiment 2, refer to related descriptions in Embodiment 2. Details are not described herein again.

The first current trend determining circuit 33 receives and processes the signal of the current end I. When the signal of the current end I presents a rising trend, 1 is input to the first input end of the fifth AND gate 34, and 0 is input to the first input end of the sixth AND gate 44. When the signal of the current end I presents a falling trend, 0 is input to the first input end of the fifth AND gate 34, and 1 is input to the first input end of the sixth AND gate 44. The second current trend determining circuit does not need to be additionally disposed, so that a structure of the rectifier can be simplified.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rectifier, comprising:
a first logic circuit, comprising a first comparator, a second comparator, and a first AND gate, wherein a non-inverting input end of the first comparator is coupled to a first voltage end, and an inverting input end of the first comparator is coupled to a second voltage end; a non-inverting input end of the second comparator is coupled to a third voltage end, and an inverting input end of the second comparator is coupled to a fourth voltage end; and a first input end of the first AND gate is coupled to an output end of the first comparator, and a second input end of the first AND gate is coupled to an output end of the second comparator; and
a first rising edge filter circuit, coupled to an output end of the first AND gate and a first control end, and configured to receive a digital signal output by the output end of the first AND gate, filter out a rising edge signal of the digital signal in the firstAns of each pulse period, generate a switch control signal, and transmit the switch control signal to the first control end;
wherein A>0.

2. The rectifier according to claim 1, wherein the rectifier further comprises:
a second logic circuit, comprising a third comparator, a fourth comparator, and a second AND gate, wherein a non-inverting input end of the third comparator is coupled to the fourth voltage end, and an inverting input end of the third comparator is coupled to the second voltage end; a non-inverting input end of the fourth comparator is coupled to the third voltage end, and an inverting input end of the fourth comparator is coupled to the first voltage end; and a first input end of the second AND gate is coupled to an output end of the third comparator, and a second input end of the second AND gate is coupled to an output end of the fourth comparator; and
a second rising edge filter circuit, coupled to an output end of the second AND gate and a second control end, and configured to receive a digital signal output by the output end of the second AND gate, filter out a rising edge signal of the digital signal in the first B ns of each pulse period, generate a switch control signal, and transmit the switch control signal to the second control end;
wherein B>0.

3. The rectifier according to claim 1 or 2, wherein the first rising edge filter circuit comprises a first delay circuit and a third AND gate;
the first delay circuit is coupled to the output end of the first AND gate and a first input end of the third AND gate; and
a second input end of the third AND gate is further coupled to the output end of the first AND gate, and an output end of the third AND gate is coupled to the first control end.

4. The rectifier according to claim 2 or 3, wherein the second rising edge filter circuit comprises a second delay circuit and a fourth AND gate;
the second delay circuit is coupled to the output end of the second AND gate and a first input end of the fourth AND gate; and
a second input end of the fourth AND gate is further coupled to the output end of the second AND gate, and an output end of the fourth AND gate is coupled to the second control end.

5. The rectifier according to claim 1 or 2, wherein the first rising edge filter circuit comprises a first current trend determining circuit, a fifth AND gate, and a first flip-flop;
the first current trend determining circuit is coupled to a current end and a first input end of the fifth AND gate, and is configured to: receive and process a signal of the current end; when the signal of the current end presents a rising trend, input 1 to the first input end of the fifth AND gate; and when the signal of the current end presents a falling trend, input 0 to the first input end of the fifth AND gate;
a second input end of the fifth AND gate is coupled to the output end of the first AND gate, and an output end of the fifth AND gate is coupled to a set end of the first flip-flop; and
a reset end of the first flip-flop is coupled to the output end of the first AND gate, and an output end of the first flip-flop is coupled to the first control end.

6. The rectifier according to claim 2 or 5, wherein the second rising edge filter circuit comprises a second current trend determining circuit, a sixth AND gate, and a second flip-flop;
the second current trend determining circuit is coupled to a current end and a first input end of the sixth AND gate, and is configured to: receive and process a signal of the current end; when the signal of the current end presents a rising trend, input 0 to the first input end of the sixth AND gate; and when the signal of the current end presents a falling trend, input 1 to the first input end of the sixth AND gate;
a second input end of the sixth AND gate is coupled to the output end of the first AND gate, and an output end of the sixth AND gate is coupled to a set end of the second flip-flop; and
a reset end of the second flip-flop is coupled to the output end of the second AND gate, and an output end of the second flip-flop is coupled to the second control end.

7. The rectifier according to claim 5, wherein the rectifier further comprises the second logic circuit and the second rising edge filter circuit;
the second rising edge filter circuit comprises a sixth AND gate and a second flip-flop;
the first current trend determining circuit is further coupled to a first input end of the sixth AND gate, and is further configured to: when the signal of the current end presents a rising trend, input 0 to the first input end of the sixth AND gate; and when the signal of the current end presents a falling trend, input 1 to the first input end of the sixth AND gate;
a second input end of the sixth AND gate is coupled to the output end of the first AND gate, and an output end of the sixth AND gate is coupled to a set end of the second flip-flop; and
a reset end of the second flip-flop is coupled to the output end of the second AND gate, and an output end of the second flip-flop is coupled to the second control end.

8. The rectifier according to any one of claims 1 to 7, wherein the rectifier further comprises a rectifier circuit, and the first control end is coupled to the rectifier circuit.

9. The rectifier according to claim 8, wherein the rectifier further comprises the second rising edge filter circuit;
the rectifier circuit comprises a first switch, a second switch, a third switch, and a fourth switch;
the first switch is configured to connect the first voltage end and the second voltage end, and a control end of the first switch is coupled to the first control end;
the second switch is configured to connect the third voltage end and the fourth voltage end, and a control end of the second switch is coupled to the first control end;
the third switch is configured to connect the first voltage end and the third voltage end, and a control end of the third switch is coupled to the second control end; and
the fourth switch is configured to connect the second voltage end to the fourth voltage end, and a control end of the fourth switch is coupled to the second control end.

10. A device, comprising a power receiving circuit and the rectifier according to any one of claims 1 to 9, wherein the power receiving circuit is coupled to the first voltage end and the fourth voltage end of the rectifier, and is configured to provide an alternating current signal for the first voltage end and the fourth voltage end.

11. The device according to claim 10, wherein the power receiving circuit comprises a cable, and the cable is coupled to the current end of the rectifier.

12. A rectifier driving method, wherein the rectifier comprises a first logic circuit and a first rising edge filter circuit, and the first logic circuit comprises a first comparator, a second comparator, and a first AND gate; and
the rectifier driving method comprises:
receiving, by a non-inverting input end of the first comparator, a signal of a first voltage end, receiving, by an inverting input end of the first comparator, a signal of a second voltage end, and performing, by the first comparator, a comparison operation on the signals received by the non-inverting input end and the inverting input end, and outputting an operation result from an output end of the first comparator;
receiving, by a non-inverting input end of the second comparator, a signal of a third voltage end, receiving, by an inverting input end of the second comparator, a signal of a fourth voltage end, and performing, by the second comparator, a comparison operation on the signals received by the non-inverting input end and the inverting input end, and outputting an operation result from an output end of the second comparator;
receiving, by a first input end of the first AND gate, a signal output by the output end of the first comparator, receiving, by a second input end of the first AND gate, a signal output by the output end of the second comparator, and performing, by the first AND gate, a logic operation on the signals received by the first input end and the second input end, and outputting an operation result from an output end of the first AND gate; and
receiving, by the first rising edge filter circuit, a digital signal output by the output end of the first AND gate, filtering out a rising edge signal of the digital signal in the first A ns of each pulse period, generating a switch control signal, and transmitting the switch control signal to a first control end;
wherein A>0.

13. The rectifier driving method according to claim 12, wherein the rectifier further comprises a second logic circuit and a second rising edge filter circuit, and the second logic circuit comprises a third comparator, a fourth comparator, and a second AND gate; and
the rectifier driving method further comprises:
receiving, by a non-inverting input end of the third comparator, the signal of the fourth voltage end, receiving, by an inverting input end of the third comparator, the signal of the second voltage end, and performing, by the third comparator, a comparison operation on the signals received by the non-inverting input end and the inverting input end, and outputting an operation result from an output end of the third comparator;
receiving, by a non-inverting input end of the fourth comparator, the signal of the third voltage end, receiving, by an inverting input end of the fourth comparator, the signal of the first voltage end, and performing, by the fourth comparator, a comparison operation on the signals received by the non-inverting input end and the inverting input end, and outputting an operation result from an output end of the fourth comparator;
receiving, by a first input end of the second AND gate, a signal output by the output end of the third comparator, receiving, by a second input end of the second AND gate, a signal output by the output end of the fourth comparator, and performing, by the second AND gate, a logic operation on the signals received by the first input end and the second input end, and outputting an operation result from an output end of the second AND gate;
receiving, by the second rising edge filter circuit, a digital signal output by the output end of the second AND gate, filtering out a rising edge signal of the digital signal in the first B ns of each pulse period, generating a switch control signal, and transmitting the switch control signal to a second control end;
wherein B>0.

14. The rectifier driving method according to claim 12, wherein the first rising edge filter circuit comprises a first delay circuit and a third AND gate; and
the receiving, by the first rising edge filter circuit, a digital signal output by the output end of the first AND gate, filtering out a rising edge signal of the digital signal in the first A ns of each pulse period, generating a switch control signal, and transmitting the switch control signal to a first control end comprises:
receiving, by the first delay circuit, the digital signal output by the output end of the first AND gate, delaying the digital signal by a ns by using a delay function of the first delay circuit, and then outputting a delayed digital signal, wherein the delayed digital signal is staggered from a high level of the digital signal in the first A ns of each pulse period, and a≤A; and
performing, by the third AND gate, a logic operation on the delayed digital signal output by the first delay circuit and the digital signal output by the output end of the first AND gate, to filter out the rising edge signal of the digital signal in the first A ns of each pulse period, generating a switch control signal, and transmitting the switch control signal to the first control end.

15. The rectifier driving method according to claim 12, wherein the first rising edge filter circuit comprises a first current trend determining circuit, a fifth AND gate, and a first flip-flop; and
the receiving, by the first rising edge filter circuit, a digital signal output by the output end of the first AND gate, filtering out a rising edge signal of the digital signal in the first A ns of each pulse period, generating a switch control signal, and transmitting the switch control signal to a first control end comprises:
receiving and processing, by the first current trend determining circuit, a signal of a current end; when the signal of the current end presents a rising trend, inputting 1 to a first input end of the fifth AND gate; and when the signal of the current end presents a falling trend, inputting 0 to the first input end of the fifth AND gate;
performing, by the fifth AND gate, a logic operation on the digital signal output by the output end of the first AND gate and a signal output by the first current trend determining circuit, to filter out the rising edge signal of the digital signal in the first A ns of each pulse period, and outputting an operation result to a set end of the first flip-flop; and
generating, by the first flip-flop, a switch control signal based on signals of a reset end and the set end, and transmitting the switch control signal to the first control end.

16. The rectifier driving method according to claim 13, wherein the second rising edge filter circuit comprises a second delay circuit and a fourth AND gate; and
the receiving, by the second rising edge filter circuit, a digital signal output by the output end of the second AND gate, filtering out a rising edge signal of the digital signal in the first B ns of each pulse period, generating a switch control signal, and transmitting the switch control signal to a second control end comprises:
receiving, by the second delay circuit, the digital signal output by the output end of the second AND gate, delaying the digital signal by b ns by using a delay function of the second delay circuit, and then outputting a delayed digital signal, wherein the delayed digital signal is staggered from a high level of the digital signal in the first B ns of each pulse period, and b≤B; and
performing, by the fourth AND gate, a logic operation on the delayed digital signal output by the second delay circuit and the digital signal output by the output end of the second AND gate, to filter out the rising edge signal of the digital signal in the first B ns of each pulse period, generating a switch control signal, and transmitting the switch control signal to the second control end.

17. The rectifier driving method according to claim 13, wherein the second rising edge filter circuit comprises a second current trend determining circuit, a sixth AND gate, and a second flip-flop; and
the receiving, by the second rising edge filter circuit, a digital signal output by the output end of the second AND gate, filtering out a rising edge signal of the digital signal in the first B ns of each pulse period, generating a switch control signal, and transmitting the switch control signal to a second control end comprises:
receiving and processing, by the second current trend determining circuit, a signal of a current end; when the signal of the current end presents a rising trend, inputting 0 to a first input end of the sixth AND gate; and when the signal of the current end presents a falling trend, inputting 1 to the first input end of the sixth AND gate;
performing, by the sixth AND gate, a logic operation on the digital signal output by the output end of the second AND gate and a signal output by the second current trend determining circuit, to filter out the rising edge signal of the digital signal in the first B ns of each pulse period, and outputting an operation result to a set end of the second flip-flop; and
generating, by the second flip-flop, a switch control signal based on signals of a reset end and the set end, and transmitting the switch control signal to the second control end.

18. The rectifier driving method according to claim 15, wherein the rectifier further comprises a second logic circuit and a second rising edge filter circuit, and the second rising edge filter circuit comprises a sixth AND gate and a second flip-flop; and
the receiving, by the second rising edge filter circuit, a digital signal output by the output end of the second AND gate, filtering out a rising edge signal of the digital signal in the first B ns of each pulse period, generating a switch control signal, and transmitting the switch control signal to a second control end comprises:
receiving and processing, by the first current trend determining circuit, the signal of the current end; when the signal of the current end presents a rising trend, inputting 0 to a first input end of the sixth AND gate; and when the signal of the current end presents a falling trend, inputting 1 to the first input end of the sixth AND gate;
performing, by the sixth AND gate, a logic operation on the digital signal output by the output end of the second AND gate and a signal output by the first current trend determining circuit, to filter out the rising edge signal of the digital signal in the first B ns of each pulse period, and outputting an operation result to a set end of the second flip-flop; and
generating, by the second flip-flop, a switch control signal based on signals of a reset end and the set end, and transmitting the switch control signal to the second control end.
